# EUROPÄISCHE PATENTSCHRIFT

(11) **EP 1 624 967 B1**
(45) Veröffentlichungstag und Bekanntmachung des Hinweises auf die Patenterteilung: **04.03.2009**
(21) Anmeldenummer: 04731914.0
(22) Anmeldetag: 10.05.2004
(51) Int. Cl.: B01L 3/00, B03C 5/02

(54) **VERFAHREN UND VORRICHTUNGEN ZUR FLÜSSIGKEITSBEHANDLUNG SUSPENDIERTER PARTIKEL**
METHODS AND DEVICES FOR LIQUID-TREATING SUSPENDED PARTICLES
PROCEDES ET DISPOSITIFS PERMETTANT DE TRAITER DES PARTICULES EN SUSPENSION AU MOYEN D'UN LIQUIDE

(30) Priorität: 09.05.2003 DE 10320869
(43) Veröffentlichungstag der Anmeldung: 15.02.2006
(73) Patentinhaber: PerkinElmer Cellular Technologies Germany GmbH, 22525 Hamburg (DE)
(72) Erfinder: SCHNELLE, Thomas, 10243 Berlin (DE); MÜLLER, Torsten, 12439 Berlin (DE)
(74) Vertreter: Hertz, Oliver
(86) Internationale Anmeldenummer: PCT/EP2004/004981
(87) Internationale Veröffentlichungsnummer: WO 2004/098777

(56) Entgegenhaltungen:
- WO-A-02/38262
- WO-A-99/49319
- DE-A- 19 860 117
- US-A1- 2002 088 712
- US-B1- 6 432 630
- AHN C H ET AL: "A fully integrated micromachined magnetic particle manipulator and separator" MICRO ELECTRO MECHANICAL SYSTEMS, 1994, MEMS '94, PROCEEDINGS, IEEE WORKSHOP ON OISO, JAPAN 25-28 JAN. 1994, NEW YORK, NY, USA,IEEE, 25. Januar 1994 (1994-01-25), Seiten 91-96, XP010207750 ISBN: 0-7803-1833-1

## Beschreibung

Die Erfindung betrifft Verfahren zur Behandlung mindestens eines Partikels mit mindestens einer Reaktionsflüssigkeit in einem fluidischen Mikrosystem, insbesondere Verfahren zur Flüssigkeitsbehandlung, bei denen mindestens ein suspendierter Partikel im Kanal eines fluidischen Mikrosystems in einer Halteeinrichtung fixiert ist, durch die die mindestens eine Reaktionsflüssigkeit hindurchströmt, und Vorrichtungen zur Umsetzung derartiger Verfahren.

Es ist bekannt, suspendierte Partikel in fluidischen Mikrosystemen z. B. für bestimmte Messungen, Sortierungen, Analysen, Reaktionsabläufe oder dergleichen unter der Wirkung insbesondere von elektrischen und/oder magnetischen Feldern zu manipulieren. Die Partikel umfassen allgemein Mikroobjekte mit typischen Dimensionen im Sub-mm-Bereich, wie z. B. biologische Zellen, synthetische Partikel oder in Systemen mit getrennten flüssigen Phasen flüssige Tröpfchen. Das Mikrosystem umfasst mindestens einen Hauptkanal, durch den die Partikel mit einer Trägerflüssigkeit bewegt werden und in dem z. B. zur Erzeugung von elektrischen Feldern Elektroden angeordnet sind. Bei Beaufschlagung der Elektroden mit hochfrequenten elektrischen Feldern können die Partikel unter der Wirkung negativer Dielektrophorese beispielsweise vereinzelt, fokussiert, sortiert, einzeln ortsfest positioniert oder in Gruppen geparkt werden (siehe T. Müller et al. in "Biosensors & Bioelectronics", Band 14, 1990, Seite 247-256, und in "Bioworld", Band 2/2, 2000, Seite 12-13.

Eine spezielle Aufgabe bei der Manipulation von Partikeln in Mikrosystemen besteht darin, dass die suspendierten Partikel neben der Trägerflüssigkeit zusätzlich einer Behandlungsflüssigkeit (im Folgenden: Reaktionsflüssigkeit) ausgesetzt werden. Die Behandlung mit der Reaktionsflüssigkeit kann beispielsweise der Auslösung von spezifischen chemischen Reaktionen oder Waschzwecken dienen.

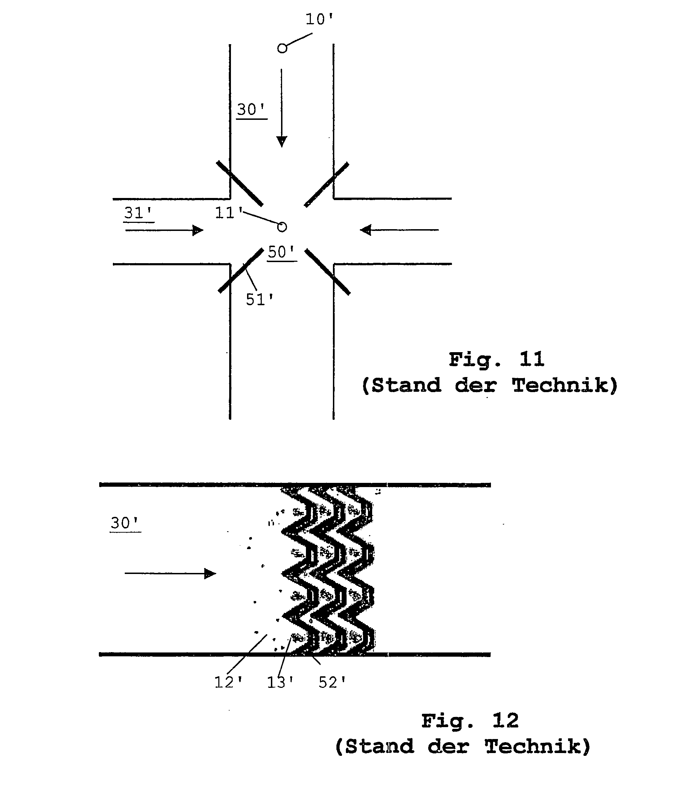

Von G. Gradl et al. wird in der Publikation "New Mikrodevices for Single Cell Analysis, Cell Sorting and Cloning-on-a-Chip: The Cytocon™ Instrument" (A.v.d. Berg et al. (Herausgeber): Micro Total Analysis Systems" 2000, Seite 443-446, Kluwer A-cademic Publishers)) ein fluidisches Mikrosystem beschrieben, bei dem zur Flüssigkeitsbehandlung von Partikeln ein Hauptkanal von einem Querkanal senkrecht gekreuzt wird, durch den die Reaktionsflüssigkeit geleitet wird. In Figur 11 ist die Kreuzung des Hauptkanals 30' mit dem Querkanal 31' schematisch illustriert. Am Kreuzungspunkt ist als Halteeinrichtung 50' eine Anordnung von acht Mikroelektroden 51' (Oktopol-Elektrodenanordnung) zur Erzeugung eines dielektrischen Feldkäfigs vorgesehen. Zur Flüssigkeitsbehandlung werden Partikel 10', 11' mit der Trägerflüssigkeit im Hauptkanal 30' bis zur Halteeinrichtung 50' transportiert und einzeln im Feldkäfig gehalten, der durch die Halteeinrichtung 50' erzeugt wird. Durch den Querkanal 31' wird die Reaktionsflüssigkeit durch die Halteeinrichtung 50' gespült. Die in der Publikation von G. Gradl et al. beschriebene Technik kann bei bestimmten Anwendungen in Bezug auf die folgenden Probleme nachteilig sein.

Im dielektrischen Feldkäfig der Oktopol-Elektrodenanordnung werden relativ geringe dielektrische Haltekräfte ausgebildet (z. B. < 100 pN), was in Abhängigkeit von der Art des behandelten Partikels (z.B. biologische Zelle, synthetisches Teilchen) eine sehr gleichmäßige Strömung mit nicht allzu hohen Strömungsgeschwindigkeiten (< 300 µm/s) erfordert. Der Querkanal 31' muss mit zusätzlichen Pumpen und insbesondere pulsationsfreien und totvolumenfreien Ventilen ausgestattet sein. Dadurch wird die Möglichkeit zur Parallelisierung (gleichzeitige Behandlung einer Vielzahl von Partikeln) und die Betriebszüverlässigkeit beschränkt. Ein weiteres Problem kann darin bestehen, dass ggf. vor dem gewünschten Beginn einer Flüssigkeitsbehandlung bereits ein Teil der noch ruhenden Reaktionsflüssigkeit aus dem Querkanal 31' in die Halteeinrichtung 50' diffundiert. Die Wirkung der quer zur Trägerflüssigkeit diffundierenden Reaktionsflüssigkeit kann zwar durch eine Erhöhung der Strömungsgeschwindigkeit der Trägerflüssigkeit vermindert werden. Allerdings ist aus den obengenannten Gründen die Erhöhung der Strömungsgeschwindigkeit nur beschränkt möglich. Kinetische Untersuchungen, bei denen die Zeitabhängigkeit der Reaktion des Partikels 11' auf die Reaktionsflüssigkeit erfasst werden soll, sind daher mit dem herkömmlichen System nur beschränkt möglich.

Aus der Publikation von T. Müller et al. (siehe oben) ist bekannt, im Kanal 30' des fluidischen Mikrosystems mit sogenannten Parkelektroden gekrümmte Feldbarrieren quer zur Kanalrichtung zu erzeugen, mit denen suspendierte Partikel vom weiteren Transport mit der Trägerflüssigkeit zurückgehalten werden können. Parkelektroden 52', die beispielhaft in Figur 12 gezeigt sind, besitzen eine dreieck- oder trapezförmige Form, so dass sich in Strömungsrichtung Potentialtöpfe bilden, in denen sich die Partikel 12' sammeln. Die herkömmlichen Parkelektroden besitzen den Nachteil, dass sie nicht für eine ortsfeste Positionierung einzelner Partikel geeignet sind, da sie kein definiertes Potentialminimum bilden. Vielmehr bilden die Partikel 12' in den Potentialtöpfen unregelmäßige Aggregate 13', so dass lokal definierte Messungen oder Bearbeitungsschritte ausgeschlossen sind. Spezifische Behandlungen können erst nach einer Freigabe von der Parkelektrode und erneuter Vereinzelung unter der Wirkung von Dielektrophorese erfolgen.

Ferner sind aus US 6 432 630 B1 und US 2002/088712 A1 mikrofluidische Systeme bekannt, die jedoch keine berührungslose Fixierung eines Partikels in einem fluidischen Mikrosystem ermöglichen.

Die Aufgabe der Erfindung ist es, verbesserte Verfahren und Vorrichtungen zur Behandlung suspendierter Partikel mit mindestens einer Reaktionsflüssigkeit in einem Kanal eines fluidischen Mikrosystems bereitzustellen, mit denen die Nachteile der herkömmlichen Flüssigkeitsbehandlung überwunden werden. Erfindungsgemäße Verfahren sollen sich insbesondere durch ein sicheres und zuverlässiges Positionieren einzelner Partikel in einer Halteeinrichtung auszeichnen und kinetische Untersuchungen mit einem definierten Beginn der Behandlung mit der Reaktionsflüssigkeit ermöglichen. Erfindungsgemäße Vorrichtungen sollen insbesondere eine vereinfachte Elektrodenstruktur besitzen und eine homogenere Behandlung von Partikeln ermöglichen. Generell soll die Anwendung der Flüssigkeitsbehandlung in Bezug auf höhere Geschwindigkeiten der Trägerflüssigkeit erweitert werden. Die erfindungsgemäß behandelten Partikel sollen am Ort der Behandlung (in der Halteeinrichtung) optischen Messverfahren zugänglich sein.

Diese Aufgaben werden durch Verfahren und Vorrichtungen mit den Merkmalen gemäß den Patentansprüchen 1 bzw. 19 gelöst. Vorteilhafte Ausführungsformen und Anwendungen der Erfindung ergeben sich aus den abhängigen Ansprüchen.

Verfahrensbezogen basiert die Erfindung auf der allgemeinen technischen Lehre, die Behandlung von mindestens einem suspendierten Partikel mit mindestens einer Reaktionsflüssigkeit mit einem räumlichen Abstand vom Ort der Zuführung der Reaktionsflüssigkeit in eine Trägerflüssigkeit, in der der Partikel suspendiert ist, durchzuführen. Die Reaktionsflüssigkeit strömt von einem Seitenkanal in den Hauptkanal mit der Trägerflüssigkeit und trifft erst stromabwärts nach der Ankopplung des Seitenkanals auf den mindestens einen Partikel. Durch diese Maßnahme wird die Zuführung der Reaktionsflüssigkeit strömungstechnisch vereinfacht. An die Gleichförmigkeit der Zuführung der Reaktionsflüssigkeit werden geringere Anforderungen gestellt. Die genannten Probleme durch eine unerwünschte Diffusion der Reaktionsflüssigkeit werden vermieden. Beschränkungen in Bezug auf die Gestaltung der Halteeinrichtung, die bei der herkömmlichen Anordnung am Kreuzungspunkt gegeben waren, werden vermieden. Die Halteeinrichtung kann für eine effektive Fixierung von Partikeln mit erhöhter Haltekraft eingerichtet werden.

Die Erfindung ermöglicht es insbesondere, die Halteeinrichtung so zu gestalten, dass der mindestens eine Partikel einzeln gehaltert oder eine Vielzahl von Partikeln nebeneinander als gerade oder gekrümmte Reihe entlang einer Potentiallinie positioniert werden, die sich quer zur Strömungsrichtung über den Hauptkanal erstreckt. Wenn der mindestens eine Partikel an einem lokalen, im Wesentlichen punktförmigen Potentialminimum oder entlang der Potentiallinie gehaltert wird kann vorteilhafterweise die Bildung von undefinierten Aggregaten oder Klumpen wie bei den herkömmlichen Parkelektroden vermieden wird. Allgemein bedeutet die Halterung an einem Potentialminimum oder entlang einer Potentiallinie, dass der Ort der maximalen Haltekräfte auf einen Punkt oder eine Linie fokussiert ist. Vorzugsweise werden berührungslose Haltekräfte durch hochfrequente elektrische Felder (negativ oder positive Dielektrophorese), elektrophoretische Feldwirkungen, magnetische Felder, optisch vermittelte Kraftwirkungen oder Schallfelder gebildet, wobei in diesen Fällen von besonderem Vorteil ist, dass entsprechende Vorrichtungen, wie z. B. Elektrodenanordnungen zur Bildung von Feldkäfigen oder optische Laser-Pinzetten, in der Mikrosystemtechnik an sich verfügbar sind. Die Haltekräfte können insbesondere bei der Verwendung von negativer oder positiver Dielektrophorese in Bezug auf die Elektroden entsprechend abstoßende oder anziehende Kräfte oder bei der Verwendung optischer Halteeinrichtungen (nach dem Prinzip von Laserpinzetten) optische Kräfte sein, die im jeweiligen Fokus maximal sind.

Für die Anwendung der Erfindung bei der Behandlung von biologischen Partikeln, wie z. B. biologischen Zellen, Zellaggregaten oder Zellbestandteilen kann es von Vorteil sein, wenn die Halteeinrichtung für eine berührungslose Fixierung der Partikel in einem schaltbaren Kraftfeld eingerichtet ist. Die berührungslose Halterung bedeutet, dass die Partikel in der Halteeinrichtung keinen mechanischen Kontakt mit Elektroden, Wänden oder anderen Komponenten des Kanals besitzen. Im Falle biologischer Materialien werden dadurch unerwünschte Adsorptionsreaktionen oder andere Änderungen der Partikel vermieden. Die Schaltbarkeit der Halteeinrichtung besitzt allgemein den Vorteil, dass nach der Behandlung des mindestens einen Partikels mit der Reaktionsflüssigkeit der mindestens eine Partikel ohne Weiteres freigegeben und im Kanal weiterbewegt werden kann.

Gemäß einer vorteilhaften Ausführungsform der Erfindung ist vorgesehen, dass der mindestens eine Partikel stromabwärts von der Mündung des Seitenkanals in den Hauptkanal außerhalb der Mitte des Hauptkanals auf dessen Seite gehaltert ist, die von der Kanalwand begrenzt wird, in der die Mündung des Seitenkanals gebildet ist (Halterung in der mündungsseitigen Hälfte des Hauptkanals). In diesem Fall tritt die Reaktionsflüssigkeit vorteilhafterweise im Wesentlichen ohne eine Durchmischung mit der Trägerflüssigkeit durch die Halteeinrichtung.

Gemäß einer abgewandelten Ausführungsform der Erfindung kann die Halteeinrichtung in der Mitte des Hauptkanals vorgesehen sein, was insbesondere von Vorteil ist, wenn mehrere Reaktionsflüssigkeiten über mehrere Seitenkanäle von verschiedenen Seiten in den Hauptkanal zugeführt werden.

Der mindestens eine Partikel wird in der Halteeinrichtung vorzugsweise unter der Wirkung von dielektrophoretischen, optischen oder mit Ultraschall erzeugten Haltekräften gehaltert. Vorteilhafterweise sind die hierzu erforderlichen Quellen, wie z.B. Elektrodenanordnungen zur Erzeugung von Feldbarrieren, optische Laserpinzetten oder Schallquellen aus der herkömmlichen fluidischen Mikrosystemtechnik an sich verfügbar. Vorteilhafterweise kann die Gestaltung der Halteeinrichtung vereinfacht werden, wenn der Partikel unter der kombinierten Wirkung dielektrophoretischer Haltekräfte und mechanischer Strömungskräfte gehaltert wird. In diesem Fall muss lediglich eine gerade oder gekrümmte Feldbarriere erzeugt werden, die sich über den Hauptkanal erstreckt.

Die kombinierte Wirkung der Haltekräfte mit den mechanischen Strömungskräften ist insbesondere von Bedeutung, wenn die Haltekräfte einen einseitig offenen Potentialtopf bilden, wie dies bspw. bei einer abgewinkelten Elektrode der Fall ist, und die Partikel ohne die über die Strömung vermittelte Vortriebskraft nicht sicher im Potentialtopf gehalten werden könnten.

Wenn sich die Feldbarriere in Längsrichtung des Hauptkanals bis zum lokalen Potentialminimum verengt, können sich Vorteile für die Halterung einzelner Partikel ergeben. Es kann insbesondere eine sogenannte Hexoden-Elektrodenanordnung vorgesehen sein, die im Vergleich zu den herkömmlich im Kreuzungspunkt von Kanälen verwendeten Feldkäfigen einfacher handhabbar ist, da für eine stabile Halterung des zu behandelten Partikels weniger Elektroden erforderlich sind als bei der Oktopol-Elektrodenanordnung. Wenn sich die Feldbarriere linear quer zur Längsrichtung des Hauptkanals erstreckt, können vorteilhafterweise viele Partikel gleichzeitig als gerade Linie gehaltert werden. Gemäß einer bevorzugten Variante der Erfindung wird die Flüssigkeitsbehandlung des mindestens einen Partikels in der Halteeinrichtung mit einer Messung von Partikeleigenschaften kombiniert. Die Messung umfasst beispielsweise eine elektrische Messung (z. B. Impedanzmessung, Rotationsmessung), eine optische Messung (z. B. Fluoreszenzmessung) und/oder eine optische Abbildung mit einem Mikroskop.

Gemäß einem weiteren Ausführungsbeispiel der Erfindung ist vorgesehen, dass parallel zur Flüssigkeitsbehandlung des mindestens einen Partikels mindestens ein Referenzpartikel in einer Referenz-Halteeinrichtung gehaltert wird, in der der Referenzpartikel ausschließlich der Trägerflüssigkeit (ohne die Reaktionsflüssigkeit) oder einer anderen Reaktionsflüssigkeit als der untersuchte Partikel ausgesetzt wird. Dies ermöglicht den Vergleich der Reaktion eines untersuchten Partikels mit dem Referenzpartikel. Zum Vergleich beider Objekte wird vorzugsweise mindestens eine Vergleichsmessung am Referenzpartikel durchgeführt und mit der Messung am untersuchten Partikel verglichen.

Wenn die Reaktionsflüssigkeit als segmentierte Flüssigkeitssäule eingespült wird, in der sich Segmente der Reaktionsflüssigkeit und Segmente einer Barrierenflüssigkeit abwechseln, können sich Vorteile für kinetische Untersuchungen ergeben. Mit der Barrierenflüssigkeit kann vorteilhafterweise eine vorzeitige Diffusion aus der Reaktionsflüssigkeit in den Hauptkanal unterbunden oder die Zuführung der Reaktionsflüssigkeit entsprechend einem bestimmten Zeitplan umgesetzt werden.

Besondere Vorteile der Erfindung können sich ergeben, wenn der Abstand der Positionierung des mindestens einen Partikels von der Mündung des Seitenkanals zur Einführung der Reaktionsflüssigkeit im Bereich von 50 µm bis 4 mm, insbesondere von 50 µm bis 2 mm gewählt ist. In diesem Abstandsbereich können einerseits die genannten Diffusionsprobleme und andererseits eine vorzeitige Vermischung der Reaktions- und Trägerflüssigkeiten vermieden werden. Je nach Anwendungsfall können auch größere Abstände, z. B. 6 mm oder mehr, vorgesehen sein.

Gemäß einer bevorzugten Anwendung der Erfindung ist nach dem Umspülen des mindestens einen in der Halteeinrichtung gehalterten Partikels mit der Reaktionsflüssigkeit eine Freigabe des Partikels von der Halteeinrichtung und ein nachfolgender Transport des Partikels mit der Flüssigkeit durch den Hauptkanal oder in einen Auslasskanal vorgesehen. Vorteilhafterweise können somit verschieden behandelte Partikel bspw. in Abhängigkeit von einem vorgegebenen Behandlungsprotokoll zu verschiedenen Anwendungen weitertransportiert oder sortiert werden. Die Freigabe und weitere Bewegung des Partikels kann, wenn im gehalterten Zustand die oben genannte Messung durchgeführt wurde, vorteilhafterweise in Abhängigkeit vom Messergebnis erfolgen. Wenn der mindestens eine Partikel auf die Behandlung mit der Reaktionsflüssigkeit in einer vorbestimmten Weise reagiert hat, in dem z. B. ein spezifischer Fluoreszenzfarbstoff an einer biologischen Zelle angekoppelt hat, kann in Abhängigkeit vom Ergebnis der Messung, z. B. bei Detektion des Fluoreszenzfarbstoffs, eine Selektion der spezifisch reagierenden Zelle und deren weiterer Transport durch den Haupt- oder Auslasskanal erfolgen. Partikel, die nicht das gewünschte Ergebnis liefern, können entsprechend insbesondere über den Auslasskanal ausgesondert und aus dem Fluidikprozess abgetrennt werden.

Die Kombination aus der erfindungsgemäßen Behandlung der zeitweilig gehalterten Partikel mit der Reaktionsflüssigkeit mit einer anschließenden Ablenkung in einen bestimmten Zielkanal aus einer Gruppe von mehreren sich anschließenden Kanälen repräsentiert somit vorteilhafterweise ein Sortierverfahren insbesondere für biologische Partikel, das eine besonders hohe Sicherheit und Selektivität besitzt.

Gemäß einer bevorzugten Ausführungsform der Erfindung erfolgt die Ablenkung in einen der genannten, der Halteeinrichtung stromabwärts nachgeordneten Kanäle unter der Wirkung hochfrequenter elektrischer Felder. Es ist eine Ablenkung durch negative oder positive Dielektrophorese vorgesehen, die vorteilhafterweise schnell ein- oder abschaltbar ist.

Gemäß weiteren vorteilhaften Modifikationen der Erfindung ist die Schaffung von dielektrophoretischen Feldbarrieren zur Abschirmung des mindestens einen Seitenkanals vom Hauptkanal und/oder zur Abschirmung der Halteeinrichtung insbesondere während der Behandlung eines fixierten Partikels mit der Reaktionsflüssigkeit vorgesehen. Diese Abschirmmaßnahmen besitzen den Vorteil, dass die Selektivität der Flüssigkeitsbehandlung und insbesondere der Sortierung erheblich verbessert werden kann, da der unerwünschte Einfluss von Partikeln bspw. in dem mindestens einen Seitenkanal und/oder in der Halteeinrichtung vermieden wird.

Die erfindungsgemäße Sortierfunktion besitzt im Vergleich zu herkömmlichen Zellsortierern den Vorteil einer erhöhten Sortiersicherheit, da im Verlauf der Partikelbehandlung, Messung und nachfolgenden Sortierung im Mikrosystem bestimmte.Feldbarrieren selektiv angesteuert werden können, um unerwünschte Fehlsortierungen auszuschließen.

Vorrichtungsbezogen basiert die Erfindung auf der allgemeinen technischen Lehre, dass in einem fluidischen Mikrosystem mit einem Hauptkanal für die Trägerflüssigkeit mit mindestens einem suspendierten Partikel, mindestens einem Seitenkanal für mindestens eine Reaktionsflüssigkeit, der in den Hauptkanal mündet und einer Halteeinrichtung für die mindestens zeitweilige Fixierung des Partikels die Halteeinrichtung stromabwärts nach der Mündung des Seitenkanals in den Hauptkanal anzuordnen. Durch die Einführung eines Abstandes zwischen der Mündung des Seitenkanals und der Halteeinrichtung, mit der der mindestens eine Partikel ohne Berührung mit Kanalwänden insbesondere einzeln an einem lokalen Potentialminimum oder als Reihe an einer Potentiallinie fixiert werden kann, wird vorteilhafterweise eine größere Variabilität bei der Gestaltung der Halteeinrichtung für eine Fixierung der Partikel mit einer erhöhten Haltekraft ermöglicht.

Gemäß der Erfindung umfasst die Halteeinrichtung eine Elektrodenanordnung, mit der ein wenigstens in Strömungsrichtung der Trägerflüssigkeit geschlossener Potentialtopf erzeugt wird. Im punktförmigen Potentialminimum des Potentialtopfs können einzelne Partikel unter Zusammenwirkung von mechanischen Strömungskräften und dielektrophoretischen Kräften besonders wirksam fixiert werden. Der Potentialtopf kann an sich mit der herkömmlichen Oktopol-Elektrodenanordnung erzeugt werden. Bevorzugt wird jedoch eine abgewandelte E-lektrodenanordung, bei der auf der stromabwärts gelegenen Seite der Halteeinrichtung mittig eine Elektrode angeordnet ist. Vorteilhafterweise kann damit die Haltekraft entgegen der Strömungsrichtung der Trägerflüssigkeit oder der Reaktionsflüssigkeit wirksam erhöht werden.

Es ist vorzugsweise eine sogenannte Hexoden-Elektrodenanordnung vorgesehen, die je drei Elektroden auf einer Boden- und einer Deckfläche des Hauptkanals umfasst. Zwei der Elektroden ragen zur lateralen Abgrenzung des Potentialtopfs von zwei Seiten in den Hauptkanal, so dass zwischen den jeweiligen freien Enden ein Abstand gebildet wird. Die dritte Elektrode ist stromabwärts von den beiden seitlichen Elektroden in der Mitte des zwischen den seitlichen Elektroden gebildeten Abstandes angeordnet. Mit der Hexoden-Elektrodenanordnung, die einen unabhängigen Gegenstand der Erfindung darstellt, kann die Strömungsgeschwindigkeit der Träger- und Reaktionsflüssigkeiten im Vergleich zu herkömmlichen fluidischen Mikrosystemen erheblich erhöht werden.

Die Haltekraft der Hexoden-Elektrodenanordnung kann vorteilhafterweise weiter erhöht werden, wenn am freien Ende der Mittelelektrode eine feldformende Struktur gebildet ist. Weitere Vorteile für die Formung des Potentialtopfs können sich ergeben, wenn zusätzlich stromaufwärts von der Hexoden-Elektrodenanordnung eine feldformende Zusatzelektrode angeordnet ist.

Gemäß einer abgewandelten Ausführungsform der Erfindung umfasst die Halteeinrichtung mindestens ein Paar Elektroden in Form gerader Elektrodenstreifen, die an den Boden- und Deckflächen des Hauptkanals angeordnet sind. Durch Beaufschlagung der geraden, streifenförmigen Elektroden mit hochfrequenten Wechselspannungen kann vorteilhafterweise eine dielektrische Feldbarriere erzeugt werden, die sich senkrecht zur Strömungsrichtung quer über den Hauptkanal erstreckt. Durch die Zusammenwirkung dielektrophoretischer Kräfte und mechanischer Strömungskräfte werden die Partikel überraschenderweise aufgereiht positioniert. Die gehalterten Partikel sind quer zur Strömungsrichtung nebeneinander in einer geraden Reihe angeordnet. Dies ermöglicht Einzelmessungen, selbst wenn mit der erfindungsgemäßen Flüssigkeitsbehandlung eine Vielzahl von Partikeln gleichzeitig behandelt werden.

Die Elektroden jeweils eines Paares von Elektrodenstreifen können einander gegenüberliegend angeordnet sein. Vorteilhafterweise kann damit die Feldwirkung verbessert werden. Alternativ können die Elektroden eines Paares in Strömungsrichtung versetzt angeordnet sein. In diesem Fall können sich Vorteile in Bezug auf die Anordnung von zwei Partikelreihen einerseits nahe der Bodenfläche und andererseits nahe der Deckfläche des Hauptkanals ergeben.

Gemäß einer weiteren Ausführungsform der Erfindung ist das Mikrosystem mit mindestens einer Messeinrichtung zur Vermessung des mindestens einen Partikels in der Halteeinrichtung ausgestattet. Vorteilhafterweise kann mit einer z. B. optischen oder elektrischen Messung im Echtzeitbetrieb die Reaktion des Partikels auf die Reaktionsflüssigkeit detektiert und ausgewertet werden. Für Vergleichsuntersuchungen kann es vorteilhaft sein, wenn das Mikrosystem des Weiteren mit einer Referenz-Halteeinrichtung für mindestens ein Referenzpartikel und einer Referenz-Messeinrichtung ausgestattet ist.

Gemäß einer abgewandelten Ausführungsform kann die Halteeinrichtung für eine Partikelfixierung im Fokus eines akustischen Feldes eingerichtet sein. In diesem Fall umfasst die Halteeinrichtung mindestens eine Schallquelle zur Ultraschallerzeugung.

Wenn das erfindungsgemäße Mikrosystem stromabwärts nach der Halteeinrichtung mindestens einen Auslasskanal aufweist, der von dem Hauptkanal abzweigt, können sich Vorteile für weitere, neue Anwendungen des Mikrosystems ergeben. Der mindestens eine Auslasskanal ermöglicht die Selektion von unbehandelten Partikeln, verschieden behandelten Partikeln oder von Partikeln, die auf die Behandlung mit der Reaktionsflüssigkeit nicht reagieren, in Abhängigkeit von den jeweiligen Partikeleigenschaften und/oder einem vorgegebenen Verfahrensprotokoll. Vorteilhafterweise wird mit dem mindestens einen Auslasskanal insbesondere die oben genannte Sortierfunktion des erfindungsgemäßen Mikrosystems verbessert.

Gemäß weiteren vorteilhaften Ausführungsformen der Erfindung ist das Mikrosystem mit wenigstens einer Elektrode zur Erzeugung einer dielektrophoretischen Feldbarriere vor dem Abzweig eines Auslasskanals (Sortierelektrode), an dem mindestens einen Seitenkanal (Barriereelektrode) und/oder zwischen der Mündung des Seitenkanals und der Halteeinrichtung (Abschirmelektrode) vorgesehen, wobei diese Elektroden einzeln oder in Kombination die Selektivität und Funktionalität des Mikrosystems verbessern.

Die Hexoden-Elektrodenanordnung zur Halterung mindestens eines suspendierten Partikels in einem Kanal eines fluidischen Mikrosystems stellt einen unabhängigen Gegenstand der Erfindung dar. Die Hexoden-Elektrodenanordnung umfasst mindestens drei Elektroden mit einer Zentralelektrode und zwei Seitenelektroden, die zur Erzeugung eines gegen die Strömungsrichtung im Kanal geöffneten Potentialtopfes mit einem Potentialminimum zusammenwirken. Die Zentralelektrode ist dazu eingerichtet, bei Beaufschlagung mit einer hochfrequenten Wechselspannung eine dielektrische Feldbarriere quer zu einer Strömungsrichtung im Kanal zu bilden, während die Seitenelektroden relativ zur Strömungsrichtung vor der Zentralelektrode angeordnet sind und dielektrische Feldbarriere im Wesentlichen parallel zur Strömungsrichtung bilden.

Wenn die Zentralelektrode an ihrem freien Ende eine Verbreiterung, zum Beispiel in Form von abstehenden Elektrodensegmenten oder einer Y- oder T-förmigen Auffächerung aufweist, können sich Vorteile für die Zuverlässigkeit der Partikelhalterung gegen die Strömungskräfte ergeben. Wenn die Hexoden-Elektrodenanordnung mit einer Gegenelektrode auf Massepotential ausgestattet ist, die relativ zur Strömungsrichtung mittig vor den Seitenelektroden angeordnet ist, kann vorteilhafterweise ein geschlossener Feldkäfig gebildet werden. Insbesondere bei einer Ansteuerung der Elektroden mit einer 60°-Phasenverschiebung kann der durch die Hexoden-Elektrodenanordnung gebildete Käfig dielektrisch symmetrisch geschlossen werden.

Die Elektrodenanordnung mit mindestens einem Paar gerader Elektrodenstreifen, die an den Boden- und Deckflächen des Kanals angeordnet sind und sich quer zur Längsrichtung des Kanals erstrecken, stellt einen weiteren unabhängigen Gegenstand der Erfindung dar. Diese Elektrodenanordnung ermöglicht vorteilhafterweise die Halterung gerader Partikelreihen, innerhalb derer die einzelnen Partikel noch identifizierbar und insbesondere messbar sind.

Weitere Einzelheiten und Vorteile der Erfindung werden im Folgenden unter Bezug auf die beigefügten Zeichnungen beschrieben. Es zeigen:
- Figuren 1 bis 5:: verschiedene Ausführungsformen erfindungsgemäßer Mikrosysteme (Ausschnitte), die zur Umsetzung des erfindungsgemäßen Verfahrens eingerichtet sind,
- Figur 6:: verschiedene Ausführungsformen erfindungsgemäßer Hexoden-Elektrodenanordnungen,
- Figur 7:: Illustrationen von Potentialverläufen, die mit erfindungsgemäßen Hexoden-Elektrodenanordnungen erzeugt werden,
- Figuren 8, 9:: verschiedene Ausführungsformen erfindungsgemäßer Halteeinrichtungen mit Streifenelektroden,
- Figur 10:: eine weitere Ausführungsform eines erfindungsgemäßen Mikrosystems, das zur Umsetzung der erfindungsgemäßen Partikelsortierung eingerichtet ist, und
- Figuren 11, 12:: Illustrationen herkömmlicher Mikrosysteme.

Die Erfindung wird mit einem fluidischen Mikrosystem realisiert, dessen Aufbau, Betriebsweise und Zusatzeinrichtungen an sich bekannt sind und daher hier nicht gesondert beschrieben werden. In der folgenden Erläuterung wird lediglich auf einen Ausschnitt eines Mikrosystems mit einem Hauptkanal, mindestens einer Mündung eines Seitenkanals und mindestens einer stromabwärts von der Mündung angeordneten Halteeinrichtung Bezug genommen. In einem erfindungsgemäßen Mikrosystem können mehrere derartige Kombinationen angeordnet sein. Die Erfindung wird im Folgenden beispielhaft unter Bezug auf die Positionierung von Partikeln in der Halteeinrichtung mit dielektrischen Kräften erläutert. Die Umsetzung der Erfindung ist nicht auf diese Art der Halterung beschränkt. Halteeinrichtungen, die auf anderen Feldwirkungen beruhen, wie z. B. Laser-Pinzetten oder Ultraschall-Halterungen mit mindestens einem Fokus können analog verwendet werden.

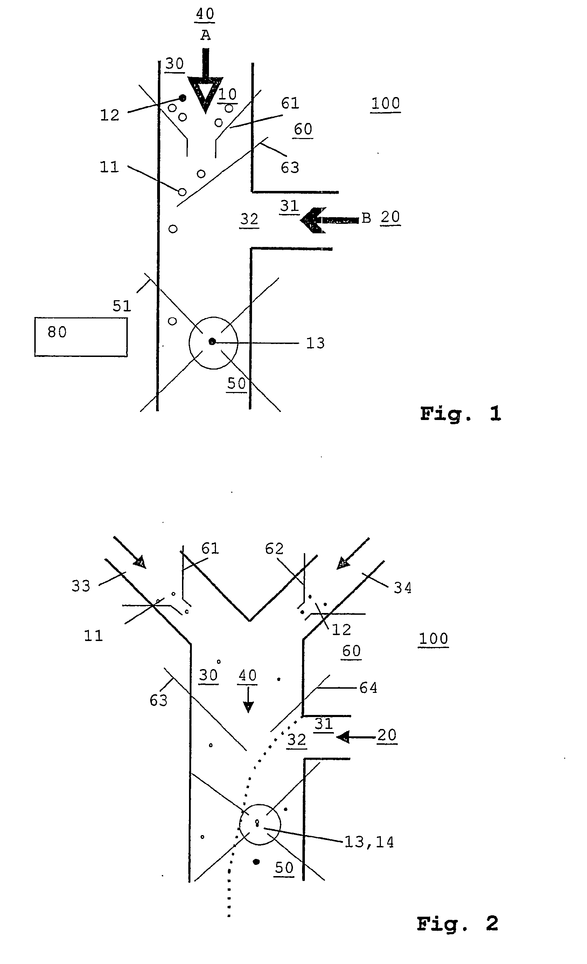

Figur 1 zeigt einen Ausschnitt eines Mikrosystems 100, das einen Hauptkanal 30 und einen Seitenkanal 31 enthält, der an der Mündung 32 in den Hauptkanal 30 übergeht. Bei diesem Ausführungsbeispiel ist eine T-förmige Kanalankopplung vorgesehen. Durch den Hauptkanal 30 strömt in Richtung des Pfeils A eine Trägerflüssigkeit 40, in der Partikel 10 suspendiert sind. Die Partikel 10 können beispielsweise ein Partikelgemisch aus verschiedenen Partikelarten 11, 12 umfassen. Durch den Seitenkanal 31 strömt in Richtung des Pfeils B eine Reaktionsflüssigkeit 20, mit der mindestens ein Partikel 13 behandelt werden soll.

Stromabwärts, also relativ zur Strömungsrichtung nach der Mündung 32 ist die Halteeinrichtung 50 vorgesehen, mit der der mindestens eine Partikel zur Behandlung mit der Reaktionsflüssigkeit mindestens zeitweilig festgehalten werden soll. Beim dargestellten Beispiel umfasst die Halteeinrichtung 50 acht Elektroden in Oktopol-Elektrodenanordnung (aus Übersichtlichkeitsgründen sind nur vier Elektroden 51 an der Boden- oder Deckfläche des Hauptkanals 30 gezeigt). Die Elektroden der Halteeinrichtung 50 werden in an sich bekannter Weise so angesteuert, dass ein allseitig geschlossener Feldkäfig 55 mit einem Potentialminimum zum Beispiel in der Mitte der Halteeinrichtung 50 gebildet wird. Das Bezugszeichen 80 bezieht sich auf eine Messeinrichtung zur Erfassung einer Eigenschaft des Partikels in der Halteeinrichtung 50.

Stromaufwärts, also relativ zur Strömungsrichtung vor der Mündung 32 ist eine Aufreiheinrichtung 60 mit einem dielektrophoretisch wirkenden Aufreihelement 61 und einem nachgeordneten dielektrophoretischen Deflektorelement 63 vorgesehen. Es ist nicht zwingend erforderlich, dass die Aufreiheinrichtung 60 in Strömungsrichtung vor der Mündung 32 angeordnet ist. Für eine sichere Beladung der Halteeinrichtung 50 mit den Partikeln 10 oder ausgewählten Partikeln ist die Aufreiheinrichtung jedoch von Vorteil.

Der Hauptkanal 30 hat beispielsweise Dimensionen von 400 µm 40 µm (Breite/Höhe). Die Partikel umfassen beispielsweise biologische Zellen, Zellbestandteile, biologische Makromoleküle oder synthetische Partikel. Die Trägerflüssigkeit 40 ist beispielsweise eine physiologische Salzlösung. Die Reaktionsflüssigkeit 20 umfasst beispielsweise eine physiologische Salzlösung. Alternativ umfasst die Reaktionsflüssigkeit beispielsweise eine Waschlösung oder eine Lösung anderer Stoffzusammensetzungen, insbesondere wässrige Lösungen, wie z. B. mit Agenzien, die eine Reaktion in biologischen Zellen auslösen, Substanzen, die auf ihr Potential zur Hemmung oder Verstärkung eines zellulären Signals überprüft werden sollen (z.B. Membranpotential, Öffnen oder Schließen von Ionenkanälen, Rezeptoraktivierung), Liganden, die an einen Plasmamembran-Rezeptor binden können, fluorigene Substanzen, die in Zellen eine fluoreszierende Substanz bilden und/oder Substanzen, die auf die Beeinflussung der Vitalität einer Zelle oder Auslösung der Apoptose untersucht werden sollen.

Typische Durchflussmengen der Träger- und Reaktionsflüssigkeiten betragen beispielsweise 0.3 bis 3 nl/s. Der Abstand der Halteeinrichtung 50 von der Mündung 32, insbesondere der Abstand des Potentialminimums der Halteeinrichtung 50 von der Mündung wird vorzugsweise im Bereich von 50 µm bis 2 mm gewählt. Allgemein ist der Abstand vorzugsweise mindestens gleich der Breite des Hauptkanals 30.

Zur Umsetzung des erfindungsgemäßen Verfahrens werden die Partikel 10 mit der Trägerflüssigkeit 40 in Strömungsrichtung (A) entsprechend der Längsrichtung des Hauptkanals 30 bewegt. An der Aufreiheinrichtung 60 erfolgt unter der Wirkung der trichterförmigen Feldbarriere des Aufreihelements 61 eine Aufreihung der Partikel 10, wie es an sich aus der fluidischen Mikrosystemtechnik bekannt ist. Die Partikel treffen anschließend auf das Deflektorelement 63, wobei die eine Partikelart 11 (offene Kreise) vom Deflektorelement seitlich abgelenkt wird, während die andere Partikelart 12 (gefüllte Kreise) ohne Ablenkung weiterbewegt wird. Die abgelenkten Partikel werden an der Halteeinrichtung 50 vorbeigeführt, während die gewünschten, nichtabgelenkten Partikel von der Halteeinrichtung 50 aufgefangen werden können (z. B. Partikel 13).

Wenn die Positionierung des Partikels 13 in der Halteeinrichtung 50 z. B. mit optischen Mitteln oder durch eine elektrische Impedanzmessung erfasst worden ist, wird durch den Seitenkanal 31 die Reaktionsflüssigkeit 20 zugeführt. Die Zuführung der Reaktionsflüssigkeit 20 erfolgt durch Betätigung einer Pumpeinrichtung (nicht dargestellt). Durch die anströmende Trägerflüssigkeit 40 wird die Reaktionsflüssigkeit 20 in den Hauptkanal 30 umgelenkt. Mit einer Strömungsrichtung parallel zur Strömungsrichtung A der Trägerflüssigkeit, also in Längsrichtung des Hauptkanals 30 strömt die Reaktionsflüssigkeit durch die Halteeinrichtung 50. Da der Abstand der Halteeinrichtung 50 von der Mündung 32 und die Durchflussrate der Träger- und Reaktionsflüssigkeiten bekannt sind, kann der Beginn der Flüssigkeitsbehandlung des Partikels 13 relativ zur Betätigung der Pumpeinrichtung genau festgestellt werden. Die Reaktion des Partikels 13 auf die Reaktionsflüssigkeit 20 kann beispielsweise durch eine Fluoreszenzmessung mit einem auf die Halteeinrichtung 50 gerichteten Mikroskop beobachtet werden. Mit der Fluoreszenzmessung am gehalterten Partikel 13 wird zum Beispiel die Beladungskinetik des Fluoreszenzfarbstoffs in den Partikel 13 erfasst.

Figur 2 zeigt ein Ausführungsbeispiel, bei dem Partikel 10 aus zwei Teilkanälen 33, 34 in den Hauptkanal 30 zusammenfließen, in den an der Mündung 32 der Seitenkanal 31 mit der Reaktionsflüssigkeit 20 mündet. Die Aufreiheinrichtung 60 umfasst in diesem Fall zwei Aufreihelemente 61, 62 und zwei Deflektorelemente 63, 64. Die Reaktionsflüssigkeit 20 bildet einen Beladungsstrom parallel zur Strömungsrichtung der Trägerflüssigkeit 40. Da die Strömungen im Mikrosystem wirbelfrei und laminar gebildet sind, ist der Beladungsstrom der Reaktionsflüssigkeit 20 vorteilhafterweise von der Trägerflüssigkeit 40 abgegrenzt. Die Grenze ist beispielhaft mit einer gepunkteten Linie eingezeichnet.

Bei dem Ausführungsbeispiel gemäß Figur 2 ist vorgesehen, dass verschiedene Partikelarten 11, 12 durch die Teilkanäle 33, 34 in den Hauptkanal 30 strömen, wobei durch geeignete Ansteuerung der Aufreiheinrichtung 60 jeweils ein Partikel 13, 14 von jeder Partikelart im Feldkäfig der Halteeinrichtung 50 gefangen wird. Sobald die gemeinsame Positionierung beider Partikel im Feldkäfig detektiert wird, kann eine Reaktion zwischen den Partikeln und die Abhängigkeit der Reaktion von der zugeführten Reaktionsflüssigkeit beobachtet werden. Es können auch Reaktionen zwischen gleichartigen Partikeln beobachtet werden.

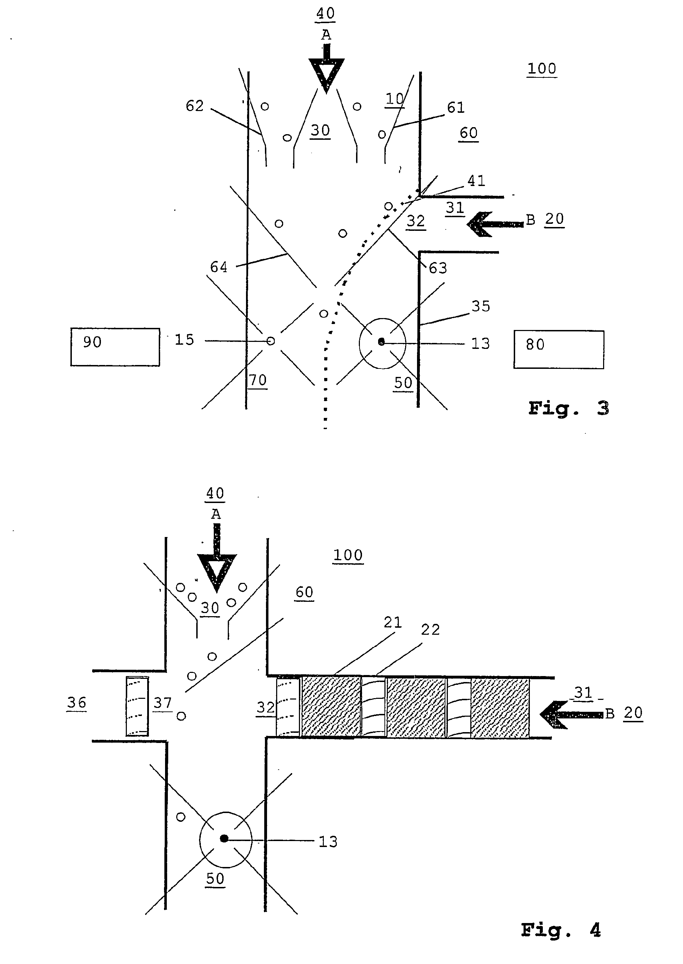

Das in Figur 3 gezeigte Ausführungsbeispiel der Erfindung illustriert das Prinzip einer erfindungsgemäßen Vergleichsmessung. Im Hauptkanal 30 sind als Aufreiheinrichtung 60 zwei Aufreihelemente 61, 62 vorgesehen. Die in der Trägerflüssigkeit 40 suspendiert anströmenden Partikel 10 werden mit den Aufreihelementen 61, 62 auf zwei getrennte Strömungsbahnen fokussiert, die jeweils auf die Halteeinrichtung 50 und eine Referenz-Halteeinrichtung 70 gerichtet sind. Zwischen den Aufreihelementen 61, 62 und den Halteeinrichtungen 50, 70 sind zwei Deflektorelemente 63, 64 angeordnet, mit denen nach Beladung der Halteeinrichtungen 50, 70 weitere anströmende Partikel auf einen mittleren Strömungspfad gelenkt und zwischen den Halteeinrichtungen 50, 70 hindurchgeführt werden können. Das Bezugszeichen 90 bezieht sich auf eine Referenz-Messeinrichtung zur Erfassung einer Eigenschaft des Referenz-Partikels in der Referenz-Halteeinrichtung 70.

Wenn beide Halteeinrichtungen 50, 70 jeweils mit einem Partikel 13, 15 beladen sind, wird die Reaktionsflüssigkeit 20 durch den Seitenkanal 31 zugeführt. Durch die Abgrenzung zwischen dem Beladungsstrom der Reaktionsflüssigkeit 20 und der Trägerflüssigkeit 40 (gepunktete Linie 41) wird lediglich der Partikel 13 in der Halteeinrichtung 50 von der Reaktionsflüssigkeit umspült, während der als Referenzpartikel verwendete Partikel 15 in der Referenz-Halteeinrichtung 70 ausschließlich in der Trägerflüssigkeit 40 suspendiert bleibt.

Die Vergleichsmessung umfasst beispielsweise eine optische oder elektrische Messung an jedem der Partikel 13, 15 und eine Korrelation beider Messwerte, z. B. durch eine Differenzbildung. Diese Ausführungsform der Erfindung ermöglicht vorteilhafterweise einen direkten Vergleich der Messergebnisse vom Partikel 13 mit den Messergebnissen vom unbeeinflussten Partikel 15.

Figur 3 illustriert ein wichtiges Merkmal der Erfindung, das unabhängig von der Bereitstellung der Referenz-Halteeinrichtung 70, also auch beispielsweise bei dem Ausführungsbeispiel gemäß Figur 1 realisiert sein kann. Allgemein ist die Halteeinrichtung 50 so gebildet, dass die mindestens zeitweilige Positionierung des zu behandelnden Partikels stromabwärts von der Mündung 32 in der Seite des Hauptkanals 30 erfolgt, in die der Seitenkanal mündet. Das Potentialminimum der Halteeinrichtung 50, z. B. des dielektrischen Feldkäfigs, ist außerhalb der Mitte des Hauptkanals 30 hin zur Seitenwand 35 verschoben angeordnet, in der auch die Mündung 32 des Seitenkanals 31 gebildet ist. Die Verschiebung der Halteeinrichtung oder wenigstens des Potentialminimums hin zum Kanalrand besitzt den Vorteil, dass selbst bei schwankenden Durchflussmengen der Reaktions- und Trägerflüssigkeiten der Partikel in der Halteeinrichtung 50 von der Reaktionsflüssigkeit umspült wird. Vorteilhafterweise wird der Beladungsstrom der Reaktionsflüssigkeit 30 homogen und kontinuierlich gebildet. Dies ermöglicht eine erhöhte Reproduzierbarkeit und Genauigkeit der am behandelten Partikel erhaltenen Messergebnisse. Ein weiterer Vorteil der zur Seitenwand 35 in verschobener Positionierung des Partikel besteht darin, dass vom Seitenkanal 31 eine relativ schwache Strömung der Reaktionsflüssigkeit gebildet werden kann. Wenn die Halteeinrichtung 50 den Partikel in der Kanalmitte positioniert, muss die Reaktionsflüssigkeit gegebenenfalls mit einer erhöhten Durchflussmenge eingeführt werden.

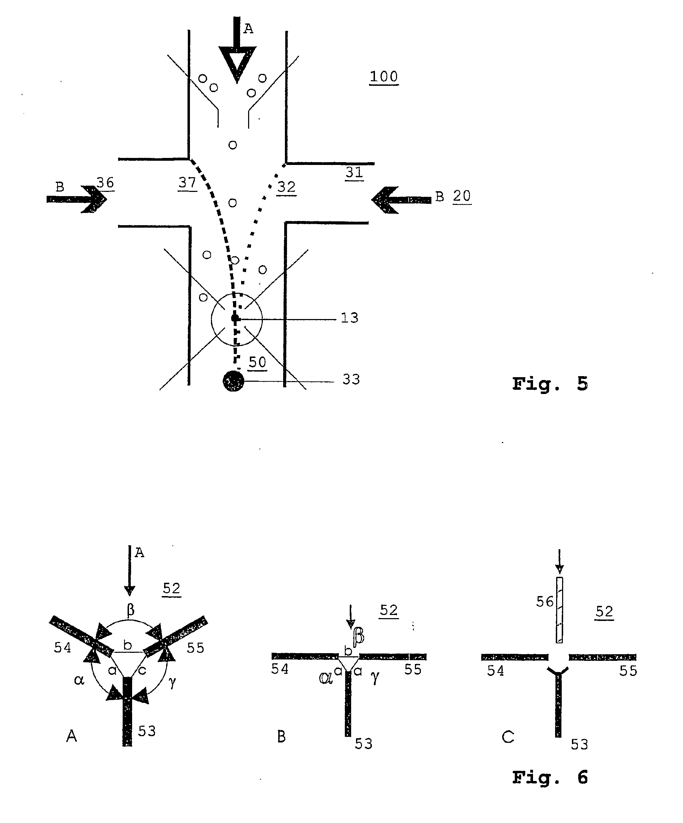

Erfindungsgemäß können mehrere Seitenkanäle 31, 36 in den Hauptkanal 30 münden, wie beispielhaft in den Figuren 4 und 5 illustriert ist. Die Seitenkanäle 31, 36 können eine Kreuzung bilden, an der über einander gegenüberliegende Mündungen 32, 37 gleichzeitig oder aufeinanderfolgend eine oder mehrere Reaktionsflüssigkeiten in den Hauptkanal gespült werden. Alternativ kann vorgesehen sein, dass die Seitenkanäle relativ zur Strömungsrichtung A im Hauptkanal 30 versetzt angeordnet sind. Die Mündungen 32, 37 können in diesem Fall auf der gleichen Seite des Hauptkanals 30 gebildet sein. Allgemein kann der Winkel zwischen einem Seitenkanal und dem Hauptkanal je nach den konkreten Anforderungen und baulichen Bedingungen im Mikrosystem gewählt werden.

Das Ausführungsbeispiel gemäß Figur 4 zeigt einen Hauptkanal 30 mit einer Aufreiheinrichtung 60 (siehe Figur 1) und einer stromabwärts von den Mündungen 32, 37 angeordneten Halteeinrichtung 50. In diesem Fall ist das Potentialminimum der Halteeinrichtung 50 vorzugsweise in der Mitte des Hauptkanals 30 angeordnet, damit ein gleichförmiger Einfluss der Reaktionsflüssigkeiten aus den Seitenkanälen 31, 36 sichergestellt wird.

Figur 4 illustriert die Zufuhr der Reaktionsflüssigkeit 20 als segmentierte Flüssigkeitssäule, bei der sich Aktivsegmente 21 der Reaktionsflüssigkeit 20 mit Passivsegmenten 22 einer Barrierenflüssigkeit abwechseln.

Die Aktivsegmente 21 enthalten die mindestens eine gewünschte Reaktionsflüssigkeit, z. B. auf der Basis einer wässrigen Lösung. Sie sind voneinander durch die Passivsegmente 22 getrennt. Die Barrierenflüssigkeit in den Passivsegmenten 22 umfasst beispielsweise Öl, das sich als Difussionsbarriere über den gesamten Querschnitt des Seitenkanals 31 erstreckt. Die Zuführung der Reaktionsflüssigkeit in Form einer segmentierten Flüssigkeitssäule besitzt den Vorteil, dass die Beladung des Partikels in der Halteeinrichtung 50 entsprechend einem bestimmten Zeitschema mit einer oder mehreren verschiedenen Reaktionsflüssigkeiten erfolgen kann. Wenn mehrere Reaktionsflüssigkeiten in der Flüssigkeitssäule angeordnet sind, kann die Behandlung des mindestens einen Partikels in der Halteeinrichtung nach einem bestimmten Verfahrensprotokoll mit verschiedenen Substanzen erfolgen. Des Weiteren wird, solange sich ein Passivsegment 22 an der Mündung 32 befindet, eine unbeabsichtigte Diffusion einer Reaktionsflüssigkeit in die Trägerflüssigkeit 41 vermieden. Mit den Diffusionsbarrieren wird vorteilhafterweise der Zeitpunkt definiert festgelegt, zu dem die jeweilige Reaktionsflüssigkeit des auf ein bestimmtes Passivsegment 22 folgenden Aktivsegments 21 den Partikel 13 erreicht.

Figur 5 illustriert schematisch die gleichzeitige Beladung des Partikels 13 in der Halteeinrichtung 50 mit zwei verschiedenen Reagenzien. Vorteilhafterweise können die Durchflussmengen entsprechend den Strömungsrichtungen B in den Seitenkanälen 31, 36 so eingestellt werden, dass sich die verschiedenen Reaktionsflüssigkeiten erst am Ort des Partikels 13 treffen und erst dort beispielsweise chemisch miteinander reagieren können. Der Zusammenfluss kann auch weiter stromabwärts vorgesehen sein. Alternativ kann vorgesehen sein, dass die verschiedenen Reaktionsflüssigkeiten bereits stromaufwärts, also in Bezug auf die Strömungsrichtung A der Trägerflüssigkeit vor der Halteeinrichtung 50 miteinander vermengt werden und entsprechend beispielsweise miteinander chemisch reagieren.

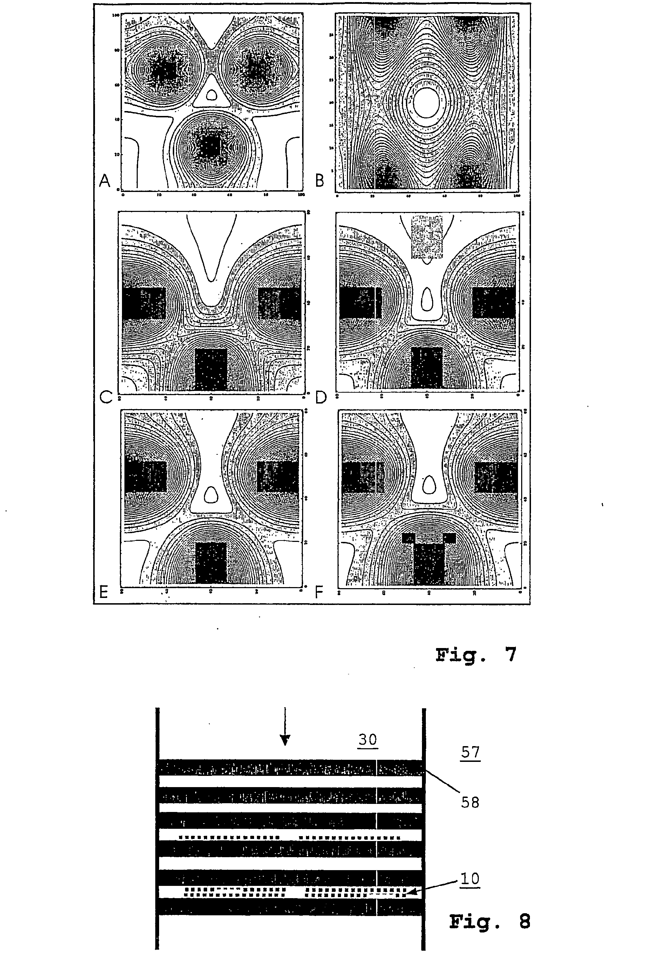

Die Figuren 6 und 7 illustrieren den Aufbau und die Funktion einer zur Umsetzung der Erfindung bevorzugt verwendeten Halteeinrichtung 52. Die Halteeinrichtung 52 umfasst sechs Elektroden, von denen drei Elektroden jeweils auf den Boden- und Deckflächen des Hauptkanals angeordnet sind. Aus Übersichtlichkeitsgründen sind in Figur 6 jeweils nur drei Elektroden 53, 54 und 55 z. B. der Bodenfläche ohne die zugehörigen Verbindungen mit einer Spannungsquelle gezeigt (Elektrodentripel) . Da die Halteeinrichtung 52 die drei Elektroden paarweise, also sechs Elektroden umfasst, wird sie auch als Hexoden-Elektrodenanordnung bezeichnet.

Die Hexoden-Elektrodenanordnung, die einen unabhängigen Gegenstand der Erfindung darstellt, zeichnet sich dadurch aus, dass die Elektroden von jedem Elektrodentripel eine Zentralelektrode 53 und zwei Seitenelektroden 54, 55 umfassen, deren freie Enden mit Abstand voneinander angeordnet sind und die bei Beaufschlagung mit einer hochfrequenten Wechselspannung einen geschlossenen oder gegebenenfalls entgegen der Strömungsrichtung A offenen Feldkäfig (Potentialtopf) bilden. Die Elektroden besitzen beispielsweise jeweils eine Streifenform. Die Breite der Elektrodenstreifen beträgt vorzugsweise 2 µm bis 30 µm. Allgemein können die Elektroden verschiedene Formen besitzen, z.B. stab- oder streifenförmig sein und eine entgegengesetzt zur Strömungseinrichtung weisende y-förmige Auffächerung aufweisen.

Die Zentralelektrode 53 ist relativ zur Strömungsrichtung mittig nach Seitenelektroden 54, 55 angeordnet, die seitlich in den Hauptkanal ragen. Ein einströmender Partikel wird in der Halteeinrichtung 52 durch die Zusammenwirkung der mechanischen Strömungskräfte der Träger- und/oder Reaktionsflüssigkeit und der dielektrischen Kräfte im Potentialminimum der Hexoden-Elektrodenanordnung positioniert.

Besondere Vorteile der Hexoden-Elektrodenanordnungen 52 bestehen darin, dass durch die Zentralelektrode 53 eine besonders wirksame Feldbarriere entgegen der Strömungsrichtung A (in Käfigauslaufrichtung) erzeugt wird. Die Haltekraft ist im Vergleich zu den Oktopol-Elektrodenanordnungen (siehe z. B. Figur 1) erhöht. Es wird ein schnelles und sicheres Beladen der Halteeinrichtung 52 mit Mikroobjekten ermöglicht. Dies ist besonders für kinetische Messungen an Zellen oder Zellbestandteilen (Zellorganellen) vorteilhaft, da nur wenige Moleküle zur Auslösung von Signalkaskaden ausreichen und bei zu langsamer Beladung Diffusionsprozesse dominieren könnten. Ein weiterer Vorteile der Hexoden-Elektrodenanordnungen besteht in der variablen Ansteuerung der Elektroden.

Die Teilbilder A, B und C von Figur 6 zeigen verschiedene Varianten von Hexoden-Elektrodenanordnungen. Die verschiedenen Ausführungsbeispiele unterscheiden sich in Bezug auf die Abstände der freien Elektrodenenden a, b und c und die Winkel zwischen den geraden Elektrodenstreifen α, β und γ. Gemäß Teilbild A ist vorgesehen, dass α, γ ≥ 90° und β ≤ 180° betragen. Es kann insbesondere α = β = γ = 120° vorgesehen sein. Die Abstände a, b und c sind beispielsweise gleich der Höhe des Hauptkanals gewählt (z. B. 40 µm). Bei 60°-Phasenansteuerung ist der durch die elektronische Struktur gemäß Fig. 6 gebildete Feldkäfig immer geschlossen. Teilbild B von Figur 6 zeigt ein bevorzugtes Ausführungsbeispiel mit α (= γ) = 90°. Bei dieser Variante ist der Feldkäfig entgegen der Strömungsrichtung offen.

Das Teilbild C illustriert weitere Varianten, die gemeinsam oder einzeln zur Optimierung der Hexoden-Elektrodenanordnung vorgesehen sein können. So ist die Zentralelektrode 53 an ihrem freien Ende durch abstehende Elektrodensegmente verbreitert. Des Weiteren ist zusätzlich eine sogenannte "floatende" oder sich auf Masse befindliche Gegenelektrode (Elektrodenpaar) 56 vorgesehen. Durch diese Gestaltung kann einerseits die Halteeffektivität der Hexoden-Elektrodenanordnung verbessert und andererseits der Feldkäfig entgegengesetzt zur Strömungsrichtung A geschlossen werden. Dadurch bleiben Partikel in der Halteeinrichtung 52, selbst wenn zeitweilig die Strömungsbewegung der Trägerflüssigkeit abgeschaltet wird.

Die folgende Tabelle illustriert verschiedene Schemata zur Ansteuerung der Hexoden-Elektrodenanordnung.

| | 1. Elektrodenebene | | | 2.Elektrodenebene | | |
|---|---|---|---|---|---|---|
| Elektrode | 54 | 55 | 53 | 54 | 55 | 53 |
| 3 Phasen-Ansteuerung | 0 | (2/3) π | (4/3) π | (4/3) π | 0 | (2/3) π |
| 4 Phasen-Ansteuerung | 0 | π/2 | -π/2 | π | -π/2 | π/2 |
| 6 Phasen-Ansteuerung | 0 | (2/3) π | (4/3) π | π | (5/3) π | π/3 |

Figur 7 illustriert die Potentialverteilung in den Hexoden-Elektrodenanordnung mit 6-Phasenansteuerung (siehe Tabelle), wobei jeweils die mittlere quadratische elektrische Feldstärke (Potential der dielektrischen Feldstärke) als Kontur in ausgewählten Ebenen über verschiedene Hexoden-Elektrodenanordnungen gezeigt sind. Im Einzelnen zeigen die Teilbilder:
A) Potential in zentraler horizontaler Ebene (xy, parallel zur Bodenfläche) zwischen den Elektroden (schwarz), für einen Käfig des Typs aus Fig. 6A mit (α=β=γ=120°),
B) Potential in zentraler vertikaler Ebene (yz) zwischen den Elektroden für einen Käfig des Typs aus Fig. 6A mit (α=β=120, Skalierung in vertikaler und horizontaler Richtung ist nicht identisch),
C) Potential in zentraler horizontaler Ebene für einen Käfig des Typs aus Fig. 6B (α=90°, β=180°) mit symmetrischem Aufbau (Elektrodenspitzen liegen auf Kreis),
D) Potential in zentraler horizontaler Ebene für einen Käfig des Typs aus Fig. 6C (α=90°, β=180°) mit symmetrischem Aufbau und floatenden Zusatzelektroden (grau),
E) Potential in zentraler horizontaler Ebene für einen Käfig des Typs aus Fig. 6B (α=γ=90°, β=180°) mit symmetrischem Aufbau, und
F) Potential in zentraler horizontaler Ebene für einen Käfig des Typs aus Fig. 6B (α=90° β=180°) mit asymmetrischem Aufbau und verstärktem Ausgangselektrodenpaar.

Die Potentialverteilungen illustrieren die Bildung des lokalen Potentialminimums mit einem starken Feldgradienten insbesondere in Strömungsrichtung an der Zentralelektrode 54.

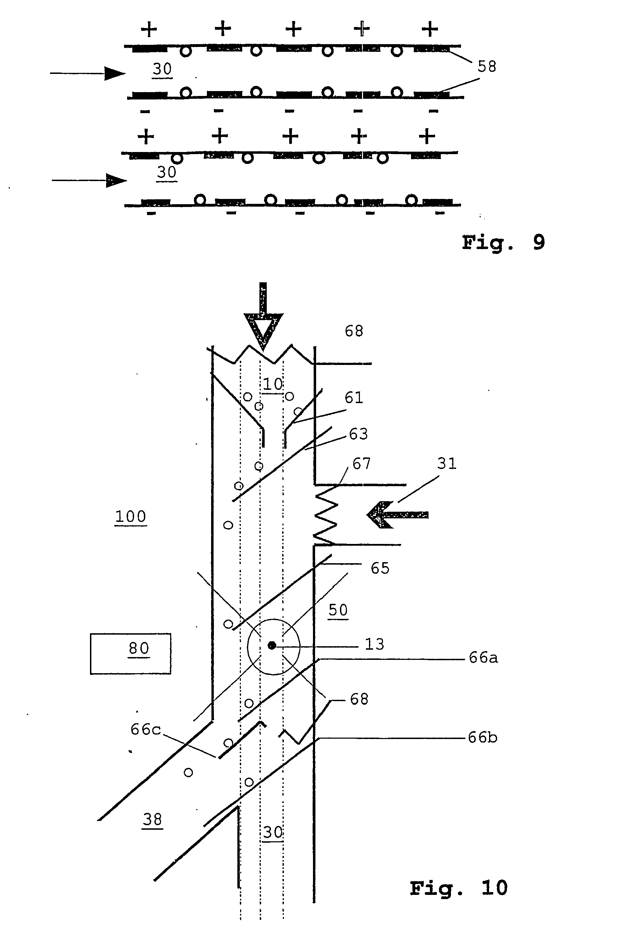

Gemäß einem weiteren unabhängigen Gesichtspunkt der Erfindung kann die Halteeinrichtung 57 durch mindestens ein Paar gerader Elektrodenstreifen 58 gebildet werden, die sich quer über die Breite des Hauptkanals 30 erstrecken und jeweils an den Boden- und Deckflächen angeordnet sind. Diese Gestaltung ist schematisch in den Figuren 8 und 9 illustriert. Ein Paar gerader Elektrodenstreifen bildet eine lineare, quer verlaufende Feldbarriere, die vorteilhafterweise eine zuverlässige Halterung auch bei einer erhöhter Ladeströmung der Reaktionsflüssigkeit sicherstellt. Vorteilhafterweise ordnen sich an dieser Feldbarriere Partikel 10 reihenweise nebeneinander an. Die Aggregatbildung, die an herkömmlichen Parkelektroden auftritt (siehe Figur 11), wird in diesem Fall vermieden. Die Halteeinrichtung 57 besitzt ferner den Vorteil, dass die optische Zugänglichkeit und die individuelle Beobachtbarkeit der Partikel erhalten bleibt. Die Breite der Elektrodenstreifen und der Abstand sind vorzugsweise im Bereich von 2 µm bis 50 µm gewählt

Figur 9 zeigt eine Schnittdarstellung des Hauptkanals 30 in Strömungsrichtung A mit überhöht eingezeichneten Elektrodenstreifen. An den Elektroden 58 ist jeweils eine Polarität entsprechend einer aktuellen Feldrichtung angegeben. Die Elektroden 58 können entsprechend dem oberen Teilbild von Figur 9 einander gegenüberliegend oder entsprechend dem unteren Teilbild von Figur 9 relativ zueinander versetzt an den oberen und unteren Kanalseiten angeordnet sein. Der Versatz der Elektroden 58 zueinander führt zu einem Versatz der aufgereihten Partikel auf der unteren und oberen Kanalseite. Bei mikroskopischer Abbildung erscheinen infolge des versetzten optischen Fokus die am Boden befindlichen Partikel optisch dunkel und die Objekte auf der oberen Kanalebene heller.

Die erfindungsgemäße Sortierfunktion eines fluidischen Mikrosystems 100 ist schematisch in Figur 10 illustriert. Das Mikrosystem 100 umfasst zusätzlich zu dem in Figur 1 gezeigten, oben beschriebenen Aufbau einen Auslasskanal 38, der stromabwärts von der Halteeinrichtung 50 vom Hauptkanal 30 abzweigt. Des Weiteren sind zusätzliche Elektroden zur Aufreihung und Manipulation der Partikel im Mikrosystem 100 vorgesehen, die einzeln oder in Kombination in den jeweiligen Kanalabschnitten angeordnet sind und neben den oben genannten Elektroden 61 bis 64 des Weiteren die Abschirmelektrode 65, die Sortierelektroden 66a, 66b und 66c, die Barriereelektrode 67 und weitere Halteelektroden 68 umfassen. Die Elektroden sind je nach ihrer Funktion als gerade Elektrodenstreifen oder als abgewinkelte Elektroden aus einzelnen, geraden Elektrodensegmenten gezeigt. Bei abgewandelten Ausführungsformen der Erfindung können stattdessen gekrümmte Elektroden oder Elektrodensegmente vorgesehen sein, um bestimmte geometrische Barriereformen zu erzielen.

Eine Sortierung von Partikeln mit dem Mikrosystem gemäß Figur 10 umfasst bspw. die folgenden Schritte. Beim Einströmen der Partikel 10, z. B. der suspendierten biologischen Zellen durch den Hauptkanal 30 könnten die Zellen unbeabsichtigt in den Seitenkanal 31 oder in den weiteren Verlauf des Hauptkanals 30 nach dem Abzweig des Auslasskanals 38 gelangen. Um dies zu verhindern und stattdessen definierte Startbedingungen im Mikrosystem zu schaffen, werden die Barriereelektrode 67 und die stromabwärts gelegene Sortierelektrode 66b mit hochfrequenten elektrischen Spannungen beaufschlagt, so dass sich für die Partikel undurchlässige Feldbarrieren bilden.

Wenn der durch den Hauptkanal 30, der beim dargestellten Ausführungsbeispiel den Sortierkanal mit den gesuchten Zellen bildet, der Trägerstrom mit einem Volumenstrom V1 eingeschaltet und gleichzeitig am Auslasskanal 38 mit einer Auslasspumpe (nicht dargestellt) ein Volumenstrom V2 gestartet wird, erfolgt der Flüssigkeitsstrom zunächst vom Aufreihelement 61 über das einzuschaltende Deflektorelement 63 in den Auslasskanal 38. Dabei wird vorzugsweise V1 > V2, besonders bevorzugt V1 ≅ 2 V2 eingestellt.

Ein Partikel 13 wird vom Deflektorelement 63 durch kurzzeitiges Abschalten der hochfrequenten elektrischen Spannung durchgelassen und in der Halteeinrichtung 50 aufgefangen. In diesem Zustand wird die Halteelektrode 68 angesteuert, um nachströmende Partikel aufzuhalten. Zeitlich korreliert wird die Abschirmelektrode 65 eingeschaltet, so dass ggf. im Hauptkanal vorhandene Partikel zum Auslasskanal 38 geleitet werden. Die Abschirmfunktion der Abschirmelektrode 65 wird vorteilhafterweise durch die Strömungskräfte unterstützt, die beim Einleiten der Reaktionsflüssigkeit durch den Seitenkanal 31 mit einem Volumenstrom V3 in den Hauptkanal 30 auf eventuell vor der Abschirmelektrode 65 befindliche Partikel ausgeübt werden. Möglichst gleichzeitig mit dem Einschalten des Volumenstroms V3 erfolgt eine Anpassung der Volumenströme V1 und V2 derart, dass V2 ₍ₙₑᵤ₎ ≅ V1₍ₙₑᵤ₎ + V3 beträgt. Damit wird erreicht, dass die gesamte Flüssigkeit im Wesentlichen über den Kanal 38 abgeleitet wird, so dass möglichst keine Reaktionsflüssigkeit in den Sortierkanal 30 gelangt.

Die Abschirmelektrode 65 wird vorzugsweise stromaufwärts unmittelbar vor der Halteeinrichtung 50 angeordnet, um die ggf. vor der Halteeinrichtung 50 vorhandenen Partikel möglichst effektiv abzuführen. Außerdem wird durch die Funktion der Abschirmelektrode verhindert, dass weitere Partikel (Zellen) außerhalb der Halteeinrichtung 50 der Reaktionsflüssigkeit aus dem Seitenkanal 31 ausgesetzt werden.

Während die Reaktionsflüssigkeit in den Hauptkanal geleitet wird, erfolgt nach den oben beschriebenen Prinzipien die Behandlung der fixierten Zelle. Während der Behandlung ist die Sortierelektrode 66b noch eingeschaltet, um alle eventuell stromabwärts von der Halteeinrichtung 50 vorhandenen Zellen in den Auslasskanal 38 abzulenken.

Nach oder während der Flüssigkeitsbehandlung erfolgt mit der Messeinrichtung 80 eine Evaluierung der behandelten Zelle 13. Anschließend erfolgt ein Abschalten der stromabwärts angeordneten Käfigelektroden der Halteeinrichtung 50, so dass die Zelle 13 aus der Halteeinrichtung 50 freigegeben wird. Die weitere Bewegung erfolgt unter der Wirkung des Trägerstroms im Hauptkanal 30. Diese wird, falls die Zelle negativ getestet wurde, durch eine über den Seitenkanal 31 nachströmende Flüssigkeit unterstützt. Im Fall einer positiv getesteten Zelle ist es das Ziel, den Volumenstrom V3 abzustellen (V3 = 0) und die Zelle 13 nur durch den Trägerstrom in den Kanal 30 zu bewegen. Hierbei wird allerdings der Volumenstrom V1 so angepasst, dass er größer als der Volumenstrom V2 und sogar größer als der Volumenstrom V1 vor Einleiten der Reaktionsflüssigkeit durch Kanal 31 ist, damit eine positiv getestete Zelle möglichst schnell im Kanal 30 bewegt wird. Während der Freigabe der vermessenen Zelle sind die stromaufwärts angeordneten Elektroden, insbesondere das Deflektorelement 63 und die Abschirmelektrode 65 eingeschaltet, so dass keine unerwünschten Partikel auf die Strömungsbahn des gemessenen Partikels gelangen können.

In Abhängigkeit vom Ergebnis der Evaluierung wird eine der Sortierelektroden 66a oder 66b eingeschaltet. Wenn das Evaluierungsergebnis negativ war, also bspw. ein gesuchter Fluoreszenzmarker auf einer Zelle nicht gefunden wurde, wird die erste Sortierelektrode 66a eingeschaltet, so dass die Zelle in den Auslasskanal 38 ("Waste-Kanal") abgeführt wird. Andernfalls wird nur die Hilfselektrode 66c eingeschaltet und die positiv gemessene Zelle von den Sortierelektroden 66a und 66b durchgelassen.

Die hier beispielhaft genannte Funktion des Hauptkanals 30 als Sortierkanal für die positiv getesteten Zellen und des Auslasskanals 38 als Ausgang für negativ getestete Zellen kann umgekehrt werden.

Die Kombination aus den Sortierelektroden 66a und 66c besitzt den besonderen Vorteil, dass alle am Deflektorelement 63 abgelenkten Partikel automatisch in den Auslasskanal 38 abgeleitet werden, während von den in der Halteeinrichtung 50 gemessenen Partikeln nur die negativ getesteten Partikel in den Auslasskanal 38 umgelenkt werden. Hierzu ist die Sortierelektrode 66c stromabwärts der Sortierelektrode 66a nachgeordnet außermittig auf der Seiten des Hauptkanals angeordnet, auf der der Auslasskanal 38 abzweigt, wobei eine Überlappung mit der Sortierelektrode 66a vorgesehen ist.

Der Aufbau gemäß Figur 10 kann vorteilhafterweise dahingehend abgewandelt werden, dass der Seitenkanal 31 auf der in Figur 10 linken Seite des Hauptkanals und auch die Komponenten 61 und 50 nach links versetzt angeordnet sind. Der besondere Vorteil dieser Ausführungsform liegt darin, dass die Reaktionsflüssigkeit aus dem Kanal 31 direkt in den Kanal 38 abfließen kann und so eine Kontamination des Hauptkanals 30 mit Reaktionsflüssigkeit vermieden wird. Bei dieser Ausführungsform können auch noch die übrigen Elektroden angepasst oder spiegelbildlich angeordnet sein.

Die in der vorstehenden Beschreibung, den Ansprüchen und den Zeichnungen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verfahren zur Behandlung mindestens eines Partikels (10-14) mit mindestens einer Reaktionsflüssigkeit (20, 21) in einem Hauptkanal (30) eines fluidischen Mikrosystems (100), mit den Schritten:
- Bewegung des mindestens einen Partikels (10-14) mit einer Trägerflüssigkeit (40), die in einer Längsrichtung des Hauptkanals (30) strömt, bis zu einer Halteeinrichtung (50, 52, 57),
- mindestens zeitweise Halterung des mindestens einen Partikels (10-14) unter der Wirkung einer Haltekraft, die von der Halteeinrichtung (50, 52, 57) ausgeübt wird, und
- Zuführung der Reaktionsflüssigkeit (20, 21) von mindestens einem Seitenkanal (31, 36) in den Hauptkanal (30), so dass der mindestens eine gehalterte Partikel (10-14) von der Reaktionsflüssigkeit (20, 21) umspült wird, wobei
- die Halteeinrichtung (50, 52, 57) stromabwärts nach einer Mündung (32, 37) des Seitenkanals (31, 36) in den Hauptkanal (30) angeordnet ist und die Reaktionsflüssigkeit (20, 21) mit einer Strömungsrichtung, die in die Längsrichtung des Hauptkanals (30) weist, durch die Halteeinrichtung (50, 52, 57) strömt,
**dadurch gekennzeichnet, dass**
- die Halterung des mindestens einen Partikels (10-14) eine berührungslose Fixierung mit einer berührungslos wirkenden Haltekraft umfasst, und
- die Halteeinrichtung (50, 52, 57) eine Elektrodenanordnung umfasst, mit der ein wenigstens in Strömungsrichtung der Trägerflüssigkeit geschlossener Potentialtopf erzeugt wird.

2. Verfahren nach Anspruch 1, bei dem der mindestens eine Partikel (10-14) in der Halteeinrichtung (50, 52, 57) an einem lokalen Potentialminimum oder entlang einer Potentiallinie gehaltert wird, die sich senkrecht zur Längsrichtung des Hauptkanals (30) erstreckt.

3. Verfahren nach Anspruch 1 oder 2, bei dem der mindestens eine Partikel (10-14) mit der Halteeinrichtung (50, 52, 57) auf einer Seite des Hauptkanals (30) gehaltert ist, die von der Kanalwand begrenzt wird, in der die Mündung des Seitenkanals (31, 36) gebildet ist.

4. Verfahren nach Anspruch 1 oder 2, bei dem der mindestens eine Partikel mit der Halteeinrichtung (50, 52, 57) in der Mitte des Hauptkanals gehaltert wird.

5. Verfahren nach mindestens einem der vorhergehenden Ansprüche, bei dem der mindestens eine Partikel mit der Halteeinrichtung mit dielektrophoretischen, optischen und/oder schallvermittelten Haltekräften gehaltert wird.

6. Verfahren nach Anspruch 5, bei dem der mindestens eine Partikel mit der Halteeinrichtung (50, 52, 57) mit einer Kombination aus dielektrophoretischen, optischen und/oder schallvermittelten Haltekräften und Strömungskräften gehaltert wird.

7. Verfahren nach Anspruch 6, bei dem mit der Halteeinrichtung (50, 52) eine Feldbarriere erzeugt wird, die sich in der Längsrichtung des Hauptkanals bis zum lokalen Potentialminimum verengt.

8. Verfahren nach Anspruch 6, bei dem mit der Halteeinrichtung (57) mindestens eine Feldbarriere erzeugt wird, die sich linear quer zur Längsrichtung des Hauptkanals erstreckt.

9. Verfahren nach mindestens einem der vorhergehenden Ansprüche, bei dem mindestens eine Messung am Partikel in der Halteeinrichtung (50, 52, 57) erfolgt.

10. Verfahren nach Anspruch 9, bei dem mindestens eine Vergleichsmessung an mindestens einem Referenzpartikel (15) in einer Referenz-Halteeinrichtung (70) erfolgt, wobei der Referenzpartikel (15) in der Referenz-Halteeinrichtung (70) ausschließlich der Trägerflüssigkeit (40) ohne die Reaktionsflüssigkeit oder einer anderen Reaktionsflüssigkeit ausgesetzt wird.

11. Verfahren nach mindestens einem der vorhergehenden Ansprüche, bei dem die mindestens eine Reaktionsflüssigkeit (20) als segmentierte Flüssigkeitssäule eingespült wird, in der sich Aktivsegmente (21) mit der mindestens einen Reaktionsflüssigkeit und Passivsegmente (22) einer Barrierenflüssigkeit abwechseln.

12. Verfahren nach mindestens einem der vorhergehenden Ansprüche, bei dem der mindestens eine Partikel mit einem Abstand im Bereich von 50 µm bis 4 mm von der Mündung (32, 37) des Seitenkanals (31, 36) positioniert wird.

13. Verfahren nach mindestens einem der vorhergehenden Ansprüche, bei dem nach der Halterung des mindestens einen Partikels (10-14) und der Zuführung der Reaktionsflüssigkeit (20, 21) eine Freigabe des mindestens einen Partikels (10-14) aus der Halteeinrichtung (50, 52, 57) und eine weitere Bewegung des mindestens einen Partikels (10-14) im Hauptkanal (30) oder einem Auslasskanal (38) erfolgen.

14. Verfahren nach Anspruch 13, bei dem in Abhängigkeit von einem Ergebnis der Messung an dem mindestens einem Partikel (10-14) in der Halteeinrichtung (50, 52, 57) die Bewegung in den Hauptkanal (30) oder den Auslasskanal (38) erfolgt.

15. Verfahren nach Anspruch 14, bei dem die Bewegung des mindestens einen Partikels (10-14) in die Haupt- oder Auslasskanäle (30, 38) eine Sortierung von Partikeln mit vorbestimmten Eigenschaften in den Hauptkanal (30) ergibt.

16. Verfahren nach mindestens einem der Ansprüche 13 bis 15, bei dem die Bewegung in den Auslasskanal (38) eine Ablenkung des mindestens einen Partikels (10-14) unter der Wirkung von hochfrequenten elektrischen Feldern umfasst.

17. Verfahren nach mindestens einem der vorhergehenden Ansprüche, bei dem der mindestens eine Seitenkanal (31, 36) vom Hauptkanal (30) durch eine dielektrophoretische Feldbarriere getrennt wird, so dass in den Seitenkanal (31, 36) keine Partikel eintreten können.

18. Verfahren nach mindestens einem der vorhergehenden Ansprüche, bei dem während der Halterung des mindestens einen Partikels (10-14) und der Zuführung der Reaktionsflüssigkeit (20, 21) auf der stromaufwärts gelegenen Seite der Halteeinrichtung (50, 52, 57) eine Feldbarriere erzeugt wird, mit der nachströmende Partikel zurückgehalten oder von der Halteeinrichtung (50, 52, 57) abgelenkt werden.

19. Fluidisches Mikrosystem (100), insbesondere zur Behandlung mindestens eines in einer Trägerflüssigkeit (40) suspendierten Partikels (10-14), das umfasst:
- einen Hauptkanal (30), der zur Aufnahme einer Strömung der Trägerflüssigkeit (40) eingerichtet ist und mit dem an mindestens einer Mündung (32, 37) ein Seitenkanal (31, 36) zur Zuführung einer Reaktionsflüssigkeit (20, 21) verbunden ist, und
- eine Halteeinrichtung (50, 52, 57), die zur mindestens zeitweisen Halterung des mindestens einen Partikels (10-14) eingerichtet ist, wobei
- der Hauptkanal (30) zur Aufnahme einer Strömung der Reaktionsflüssigkeit (20, 21) eingerichtet ist, die mit einer Strömungsrichtung, die in die Längsrichtung des Hauptkanals (30) weist, durch die Halteeinrichtung (50, 52, 57) strömt, und
- die Halteeinrichtung (50, 52, 57) stromabwärts nach der Mündung (32, 37) des Seitenkanals (31, 36) angeordnet ist
**dadurch gekennzeichnet, dass**
- die Halteeinrichtung (50, 52, 57) zur berührungslosen Fixierung des mindestens einen Partikels (10-14) eingerichtet ist, und
- die Halteeinrichtung (50, 52, 57) eine Elektrodenanordnung umfasst, mit der ein wenigstens in Strömungsrichtung der Trägerflüssigkeit geschlossener Potentialtopf erzeugt wird.

20. Mikrosystem nach Anspruch 19, bei dem die Halteeinrichtung (50, 52, 57) zur Erzeugung mindestens eines lokalen Potentialminimums oder mindestens einer Potentiallinie eingerichtet ist, die sich senkrecht zur Strömungsrichtung der Reaktionsflüssigkeit erstreckt.

21. Mikrosystem nach Anspruch 19 oder 20, bei dem die Halteeinrichtung (50, 52, 57) auf einer Seite des Hauptkanals (30) angeordnet ist, die von der Kanalwand begrenzt wird, in der die Mündung des Seitenkanals (31, 36) gebildet ist.

22. Mikrosystem nach Anspruch 19 oder 20, bei dem die Halteeinrichtung (50, 52, 57) in der Mitte des Hauptkanals angeordnet ist.

23. Mikrosystem nach mindestens einem der vorhergehenden Ansprüche 19 bis 22, bei dem die Halteeinrichtung (50, 52, 57) zur Ausübung von dielektrophoretischen, optischen und/oder schallvermittelten Haltekräften eingerichtet ist.

24. Mikrosystem nach Anspruch 23, bei dem die Halteeinrichtung (50, 52) zur Bildung einer dielektrischen Feldbarriere eingerichtet ist, die sich in der Längsrichtung des Hauptkanals bis zum lokalen Potentialminimum verengt.

25. Mikrosystem nach Anspruch 24, bei dem die Halteeinrichtung (52) mindestens eine Zentralelektrode (54) umfasst, die auf der stromabwärts gelegenen Seite der Halteeinrichtung (52) mittig angeordnet ist.

26. Mikrosystem nach Anspruch 25, bei dem die Halteeinrichtung (52) mindestens zwei Seitenelektroden (53, 55) aufweist, die auf der stromaufwärts gelegenen Seite der Zentralelektrode (54) in den Kanal ragen.

27. Mikrosystem nach Anspruch 26, bei dem die Halteeinrichtung (52) mindestens eine Gegenelektrode (56) aufweist, die auf der stromaufwärts gelegenen Seite der Seitenelektroden (53, 55) angeordnet ist.

28. Mikrosystem nach Anspruch 23, bei dem die Halteeinrichtung (57) zur Bildung mindestens einer Feldbarriere eingerichtet ist, die sich linear quer zur Längsrichtung des Hauptkanals erstreckt.

29. Mikrosystem nach mindestens einem der vorhergehenden Ansprüche 19 bis 28, bei dem mindestens eine Messeinrichtung (80) zur Vermessung des Partikel in der Halteeinrichtung (50, 52, 57) vorgesehen ist.

30. Mikrosystem nach Anspruch 29, bei dem mindestens eine Referenz-Messeinrichtung (90) zur Vergleichsmessung an mindestens einem Referenzpartikel in einer Referenz-Halteeinrichtung (70) vorgesehen ist.

31. Mikrosystem nach mindestens einem der vorhergehenden Ansprüche 19 bis 30, bei dem die Halteeinrichtung (50, 52, 57) dazu vorgesehen ist, den mindestens einen Partikel mit einem Abstand im Bereich von 50 µm bis 4 mm von der Mündung (32, 37) des Seitenkanals (31, 36) zu positionieren.

32. Mikrosystem nach mindestens einem der vorhergehenden Ansprüche 19 bis 31, bei dem mindestens ein Auslasskanal (38) stromabwärts nach der Halteeinrichtung (50, 52, 57) angeordnet ist.

33. Mikrosystem nach Anspruch 31, bei dem zwischen der Halteeinrichtung (50, 52, 57) und dem mindestens einen Auslasskanal (38) mindestens eine Sortierelektrode (66a, 66b) vorgesehen ist.

34. Mikrosystem nach mindestens einem der vorhergehenden Ansprüche 19 bis 33, bei dem mindestens eine Barriereelektrode (67) in den mindestens einen Seitenkanal (31, 36) angeordnet ist, mit der ein Eintreten von Partikeln in den mindestens einen Seitenkanal (31, 36) verhindert wird.

35. Mikrosystem nach mindestens einem der vorhergehenden Ansprüche 19 bis 34, bei dem zwischen der Mündung (32, 37) des mindestens einen Seitenkanals (31, 36) und der Halteeinrichtung (50, 52, 57) eine Abschirmelektrode (65) angeordnet ist, mit der Partikel zurückgehalten oder von der Halteeinrichtung (50, 52, 57) abgelenkt werden können.

36. Mikrosystem nach einem der Ansprüche 19 bis 35, **dadurch gekennzeichnet,**
a) **dass** die Elektrodenanordnung (52) zur berührungslosen Halterung der suspendierten Partikel in dem Hauptkanal (30) des fluidischen Mikrosystems ausgebildet ist,
b) **dass** die Elektrodenanordnung (52) mindestens drei Paare von Elektroden (53, 54, 55) aufweist,
c) **dass** die Elektroden (53, 54, 55) jeweils an Bodenflächen und Deckflächen des Hauptkanals (30) angeordnet sind und jeweils eine Zentralelektrode (53) und zwei Seitenelektroden (54, 55) umfassen,
d) **dass** die Zentralelektroden (53) dazu eingerichtet sind, bei Beaufschlagung mit einer hochfrequenten Wechselspannung eine dielektrische Feldbarriere quer zu einer Strömungsrichtung (A) in dem Hauptkanal (30) zu bilden, und
e) **dass** die Seitenelektroden (54, 55) relativ zur Strömungsrichtung (A) vor der Zentralelektrode (53) angeordnet sind.

37. Mikrosystem nach Anspruch 36, bei dem wenigstens eine der Zentralelektroden (53) an ihrem freien Ende eine Verbreiterung aufweist.

38. Mikrosystem gemäß Anspruch 36 oder 37, das mit mindestens einer auf Massepotential oder freiem (floatenden) Potential betriebene Gegenelektrode (56) ausgestattet ist, die relativ zur Strömungsrichtung (A) mittig vor den Seitenelektroden (54, 55) angeordnet ist.

39. Mikrosystem nach einem der Ansprüche 19 bis 35,
**dadurch gekennzeichnet,**
a) **dass** die Elektrodenanordnung zur Halterung der suspendierter Partikel in dem Hauptkanal (30) des fluidischen Mikrosystems ausgebildet ist, und
b) **dass** die Elektrodenanordnung mindestens ein Paar gerader Elektrodenstreifen (58) aufweist, die an den Bodenflächen und den Deckflächen des Hauptkanals (30) angeordnet sind und sich quer zur Längsrichtung des Kanals erstrecken.

40. Mikrosystem gemäß Anspruch 39, bei der die Elektrodenstreifen (58) an den Bodenflächen und den Deckflächen einander gegenüberliegend ausgerichtet sind.

41. Mikrosystem gemäß Anspruch 39, bei der die Elektrodenstreifen (58) an den Bodenflächen und den Deckflächen versetzt ausgerichtet sind.

## Claims

1. A method for the treatment of at least one particle (10-14) with at least one reaction liquid (20, 21) in a main conduit (30) of a fluidic microsystem (100), with the steps:
- movement of the at least one particle (10-14) with a carrier liquid (40) that flows in a longitudinal direction of the main conduit (30) to a holding apparatus (50, 52, 57),
- at least intermittent holding of the at least one particle (10-14) under the action of a holding force exerted by the holding apparatus (50, 52, 57), and
- the supplying of the reaction liquid (20, 21) from at least one side conduit (31, 36) into the main conduit (30), so that the reaction liquid (20, 21) flows around the at least one held particle (10-14), in which
- the holding apparatus (50, 52, 57) is arranged downstream after a mouth (32, 37) of the side conduit (31, 36) into the main conduit (30) and the reaction liquid (20, 21) flows through the holding apparatus (50, 52, 57) with a direction of flow facing in the longitudinal direction of the main conduit (30,
**characterized in that**
- the holding of the at least one particle (10-14) comprises a contactless fixing with a holding force acting without contact, and
- the holding apparatus (50, 52, 57) comprises an electrode arrangement with which a potential pot closed at least in the direction of flow of the carrier liquid is produced.

2. The method according to Claim 1, in which the at least one particle (10-14) is held in the holding apparatus (50, 52, 57) on a local potential minimum or along a potential line extending vertically to the longitudinal direction of the main conduit (30).

3. The method according to Claim 1 or 2, in which the at least one particle (10-14) is held by the holding apparatus (50, 52, 57) on the side of the main conduit (30) that is delimited by the conduit wall in which the mouth of the side conduit (31, 36) is formed.

4. The method according to Claim 1 or 2, in which a particle is held by the holding apparatus (50, 52, 57) in the middle of the main conduit.

5. The method according to at least one of the previous claims, in which the at least one particle is held by the holding apparatus with dielectrophoretic, optical and/or sonically mediated holding forces.

6. The method according to Claim 5, in which the at least one particle is held by the holding apparatus (50, 52, 57) with a combination of dielectrophoretic, optical and/or sonically mediated holding forces.

7. The method according to Claim 6, in which a field barrier is produced with the holding apparatus (50, 52) that is constricted in the longitudinal direction of the main conduit to the local potential minimum.

8. The method according to Claim 6, in which at least one field barrier is produced with the holding apparatus (57) that extends linearly transversely to the longitudinal direction of the main conduit.

9. The method according to at least one of the previous claims, in which at least one measuring takes place on the particle in the holding apparatus (50, 52, 57).

10. The method according to Claim 9, in which at least one comparison measurement takes place on at least one reference particle (15) in a reference holding apparatus (70), which reference particle (15) in the reference holding apparatus (70) is exposed exclusively to the carrier liquid (40) without the reaction liquid or to another reaction liquid.

11. The method according to at least one of the previous claims, in which the at least one reaction liquid (20) is washed in as segmented liquid column in which active segments (21) alternate with the at least one reaction liquid and passive segments (22) with a barrier liquid.

12. The method according to at least one of the previous claims, in which the at least one particle is positioned with a distance in the range of 50 µm to 4 mm from the mouth (32, 37) of the side conduit (31, 36).

13. The method according to at least one of the previous claims, in which after the holding of the at least one particle (10-14) and the supplying of the reaction liquid (20, 21) a release of the at least one particle (10-14) from the holding apparatus (50, 52, 57) and a further movement of the at least one particle (10-14) in the main conduit (30) or an outlet conduit (38) take place.

14. The method according to Claim 13, in which the movement takes place in the main conduit (30) or the outlet conduit (38) in dependency on a result of the measuring on the at least one particle (10-14) in the holding apparatus (50, 52, 57).

15. The method according to Claim 14, in which the movement of the at least one particle (10-14) into the main- or outlet conduits (30, 38) results in a sorting of particles with predetermined properties into the main conduit (30).

16. The method according to at least one of Claims 13 to 15, in which the movement into the outlet conduit (38) comprises a deflection of the at least one particle (10-14) under the action of high-frequency electrical fields.

17. The method according to at least one of the previous claims, in which the at least one side conduit (31, 36) is separated from the main conduit (30) by a dielectrophoretic field barrier, so that no particles can enter into the side conduit (31, 36).

18. The method according to at least one of the previous claims, in which during the holding of the at least one particle (10-14) and the supplying of the reaction liquid (20, 21) on the upstream side of the holding apparatus (50, 52, 57) a field barrier is produced with which subsequently flowing particles are held back or deflected from the holding apparatus (50, 52, 57).

19. A fluidic microsystem (100), especially for treating at least one particle (10-14) suspended in a carrier liquid (40), that comprises:
- a main conduit (30) that is arranged to receive a flow of the carrier liquid (40) and to which a side conduit (31, 36) is connected on at least one mouth (32, 37) for supplying a reaction liquid (20, 21), and
- a holding apparatus (50, 52, 57) that is arranged for the at least intermittent holding of the at least one particle (10-14), in which
- the main conduit (30) is arranged to receive a flow of the reaction liquid (20, 21), that flows through the holding apparatus (50, 52, 57) with a direction of flow facing in the longitudinal direction of the main conduit (30), and
- the holding apparatus (50, 52, 57) is arranged downstream after the mouth (32, 37) of the side conduit (31, 36),
**characterized in that**
- the holding apparatus (50, 52, 57) is arranged for the contactless fixing of the at least one particle (10-14), and
- the holding apparatus (50, 52, 57) comprises an electrode arrangement with which a potential pot closed at least in the direction of flow of the carrier liquid is produced.

20. The microsystem according to Claim 19, in which the holding apparatus (50, 52, 57) is arranged to produce at least one local potential minimum or at least one potential line extending vertically to the direction of flow of the reaction liquid.

21. The microsystem according to Claim 19 or 20, in which the holding apparatus (50, 52, 57) is arranged on one side of the main conduit (30) that is delimited by the conduit wall in which the mouth of the side conduit (31, 36) is formed.

22. The microsystem according to Claim 19 or 20, in which the holding apparatus (50, 52, 57) is arranged in the middle of the main conduit.

23. The microsystem according to at least one of the previous Claims 19 to 22, in which the holding apparatus (50, 52, 57) is arranged to exert dielectrophoretic, optical and/or sonically mediated holding forces.

24. The microsystem according to Claim 23, in which the holding apparatus (50, 52) is arranged for the formation of a dielectric field barrier that is constricted in the longitudinal direction of the main conduit to the local potential minimum.

25. The microsystem according to Claim 24, in which the holding apparatus (52) comprises at least one central electrode (54) arranged centrally on the downstream side of the holding apparatus (52).

26. The microsystem according to Claim 25, in which the holding apparatus (52) comprises at least two side electrodes (53, 55) that extend into the conduit on the upstream side of the central electrode (54).

27. The microsystem according to Claim 26, in which the holding apparatus (52) comprises at least one counterelectrode (56) arranged on the upstream side of the side electrodes (53, 55).

28. The microsystem according to Claim 23, in which the holding apparatus (57) is arranged to form at least one field barrier that extends linearly transversely to the longitudinal direction of the main conduit.

29. The microsystem according to at least one of the previous Claims 19 to 28, in which at least one measuring apparatus (80) is provided for measuring the particle in the holding apparatus (50, 52, 57).

30. The microsystem according to Claim 29, in which at least one reference measuring apparatus (90) is provided for the comparison measuring on at least one reference particle in a reference holding apparatus (70).

31. The microsystem according to at least one of the previous Claims 19 to 30, in which the holding apparatus (50, 52, 57) is provided for positioning the at least one particle at a distance in the range of 50 µm to 4 mm from the mouth (32, 37) of the side conduit (31, 36).

32. The microsystem according to at least one of the previous Claims 19 to 31, in which at least one outlet conduit (38) is arranged downstream after the holding apparatus (50, 52, 57).

33. The microsystem according to Claim 31, in which at least one sorting electrode (66a, 66b) is provided between the holding apparatus (50, 52, 57) and the at least one outlet conduit (38).

34. The microsystem according to at least one of the previous Claims 19 to 33, in which at least one barrier electrode (67) is arranged in the at least one side conduit (31, 36) with which an entrance of particles into the at least one side conduit (31, 36) is prevented.

35. The microsystem according to at least one of the previous Claims 19 to 34, in which a screening electrode (65) is arranged between the mouth (32, 37) of the at least one side conduit (31, 36) and the holding apparatus (50, 52, 57) with which particles are held back or can be deflected from the holding apparatus (50, 52, 57).

36. The microsystem according to at least one of Claims 19 to 35, **characterized in**
a) **that** the electrode arrangement (52) is formed for the contactless holding of the suspended particles in the main conduit (30) of the fluidic microsystem,
b) **that** the electrode arrangement (52) comprises at least three pairs of electrodes (53, 54, 55),
c) **that** the electrodes (53, 54, 55) are arranged on bottom surfaces and top surfaces of the main conduit (30) and comprise a central electrode (53) and two side electrodes (54, 55),
d) **that** the central electrodes (53) are arranged in order to form a dielectrical field barrier transversally to a direction of flow (A) in the main conduit (30) when loaded with a high-frequency alternating voltage, and
e) **that** the side electrodes (54, 55) are arranged in front of the central electrode (53) relative to the direction of flow (A).

37. The microsystem according to Claim 36, in which at least one of the central electrodes (53) has a widened out area on its free end.

38. The microsystem according to Claim 36 or 37, that is equipped with at least one counterelectrode (56) operated on mass potential or free (floating) potential and arranged centrally in front of the side electrodes (54, 55) relative to the direction of flow (A).

39. The microsystem according to one of Claims 19 to 35, **characterized in**
a) **that** the electrode arrangement is formed for holding the suspended particles in the main conduit (30) of the fluidic microsystem, and
b) **that** the electrode arrangement comprises at least one pair of straight electrode strips (58) that are arranged on the bottom surfaces and the top surfaces of the main conduit (30) and extend transversally to the longitudinal direction of the conduit.

40. The microsystem according to Claim 39, in which the electrode strips (58) are aligned opposite each other on the bottom surfaces and the top surfaces.

41. The microsystem according to Claim 39, in which the electrode strips (58) are aligned in a staggered manner on the bottom surfaces and the top surfaces.

## Revendications

1. Procédé de traitement d'au moins une particule (10-14) avec au moins un liquide réactif (20, 21) dans un canal principal (30) d'un microsystème fluidique (100), comportant les étapes suivantes :
- mise en mouvement de la ou des particules (10-14) par un liquide porteur (40) s'écoulant dans un sens longitudinal du canal principal (30) jusqu'à un dispositif d'arrêt (50, 52, 57),
- confinement au moins temporaire de la ou des particules (10-14) sous l'effet d'une force de maintien exercée par le dispositif d'arrêt (50, 52, 57), et
- conduction du liquide réactif (20, 21) d'au moins un canal latéral (31, 36) vers le canal principal (30) de manière à enrober de liquide réactif (20, 21) au moins une particule confinée (10-14),
- le dispositif d'arrêt (50, 52, 57) étant disposé en aval d'un débouché (32, 37) du canal latéral (31, 36) dans le canal principal (30), et le liquide réactif (20, 21) s'écoulant par le dispositif d'arrêt (50, 52, 57) dans une direction d'écoulement allant dans le sens longitudinal du canal principal (30),
**caractérisé en ce que**
- le confinement de la ou des particules (10-14) comprend une fixation sans contact avec une force de maintien agissant sans contact, et
- **en ce que** le dispositif d'arrêt (50, 52, 57) comprend un agencement d'électrodes au moyen duquel un puits de potentiel est généré au moins dans la direction d'écoulement du liquide porteur.

2. Procédé selon la revendication 1, où la ou les particules (10-14) sont confinées dans le dispositif d'arrêt (50, 52, 57) à un minimum de potentiel local ou le long d'une ligne de potentiel s'étendant perpendiculairement au sens longitudinal du canal principal (30).

3. Procédé selon la revendication 1 ou la revendication 2, où la ou les particules (10-14) sont confinées par le dispositif d'arrêt (50, 52, 57) sur un côté du canal principal (30) limité par la paroi du canal où est formé le débouché du canal latéral (31, 36).

4. Procédé selon la revendication 1 ou la revendication 2, où la ou les particules sont confinées par le dispositif d'arrêt (50, 52, 57) au centre du canal principal.

5. Procédé selon au moins une des revendications précédentes, où la ou les particules sont confinées par le dispositif d'arrêt avec des forces de maintien diélectrophorétiques, optiques et/ou à transmission acoustique.

6. Procédé selon la revendication 5, où la ou les particules sont confinées par le dispositif d'arrêt (50, 52, 57) avec une combinaison de forces de maintien diélectrophorétiques, optiques et/ou à transmission acoustique et de forces d'écoulement.

7. Procédé selon la revendication 6, où une barrière de champ est générée par le dispositif d'arrêt (50, 52, 57), laquelle se rétrécit dans le sens longitudinal du canal principal jusqu'au minimum de potentiel local.

8. Procédé selon la revendication 6, où au moins une barrière de champ est générée par le dispositif d'arrêt (57), laquelle s'étend linéairement perpendiculairement au sens longitudinal du canal principal.

9. Procédé selon au moins une des revendications précédentes, où au moins une mesure est exécutée sur la particule dans le dispositif d'arrêt (50, 52, 57).

10. Procédé selon la revendication 9, où au moins une mesure comparative est exécutée sur au moins une particule de référence (15) dans un dispositif d'arrêt de référence (70), ladite particule de référence (15) étant exclusivement exposée au liquide porteur (40) sans le liquide réactif ou à un autre liquide réactif dans le dispositif d'arrêt de référence (70).

11. Procédé selon au moins une des revendications précédentes, où le ou les liquides réactifs (20) sont injectés comme colonne liquide segmentée où des segments actifs (12) avec le ou les liquides réactifs alternent avec des segments passifs (22) d'un liquide de barrière.

12. Procédé selon au moins une des revendications précédentes, où la ou les particules sont positionnées avec un espacement de l'ordre de 50 µm à 4 mm par rapport au débouché (32, 37) du canal latéral (31, 36).

13. Procédé selon au moins une des revendications précédentes, où après confinement de la ou des particules (10-14) et conduction du liquide réactif (20, 21), sont effectuées une libération de la ou des particules (10-14) hors du dispositif d'arrêt (50, 52, 57) et une autre mise en mouvement de la ou des particules (10-14) dans le canal principal (30) ou un canal de vidange (38).

14. Procédé selon la revendication 13, où la mise en mouvement dans le canal principal (30) ou le canal de vidange (38) est effectuée en fonction d'un résultat de la mesure sur la ou les particules (10-14) dans le dispositif d'arrêt (50, 52, 57).

15. Procédé selon la revendication 14, où la mise en mouvement de la ou des particules (10-14) dans les canaux principal ou de vidange (30, 38) produit un tri de particules avec des propriétés définies dans le canal principal (30).

16. Procédé selon au moins une des revendications 13 à 15, où la mise en mouvement dans le canal de vidange (38) comporte une déviation de la ou des particules (10-14) sous l'effet de champs électriques à haute fréquence.

17. Procédé selon au moins une des revendications précédentes, où le ou les canaux latéraux (31, 36) sont séparés du canal principal (30) par une barrière de champ diélectrophorétique, de manière à empêcher la pénétration de particules dans le canal latéral (31, 36).

18. Procédé selon au moins une des revendications précédentes, où, pendant le confinement de la ou des particules (10-14) et la conduction du liquide réactif (20, 21) sur le côté amont du dispositif d'arrêt (50, 52, 57), une barrière de champ est générée, au moyen de laquelle la particule suivante est retenue ou déviée du dispositif d'arrêt (50, 52, 57).

19. Microsystème fluidique (100), en particulier pour le traitement d'au moins une particule (10-14) en suspension dans un liquide porteur (40), comprenant :
- un canal principal (30) prévu pour recevoir un flux du liquide porteur (40), auquel est relié par au moins un débouché (32, 37) un canal latéral (31, 36) pour la conduction d'un liquide réactif (20, 21), et
- un dispositif d'arrêt (50, 52, 57) prévu pour un confinement au moins temporaire de la ou des particules (10-14), dans lequel
- le canal principal (30) étant prévu pour recevoir un flux du liquide réactif (20, 21) s'écoulant par le dispositif d'arrêt (50, 52, 57) dans une direction d'écoulement allant dans le sens longitudinal du canal principal (30), et
- le dispositif d'arrêt (50, 52, 57) étant disposé en aval du débouché (32, 37) du canal latéral (31, 36)
**caractérisé en ce que**
- le dispositif d'arrêt (50, 52, 57) est prévu pour la fixation sans contact de la ou des particules (10-14), et
- le dispositif d'arrêt (50, 52, 57) comprend un agencement d'électrodes au moyen duquel un puits de potentiel est généré au moins dans la direction d'écoulement du liquide porteur.

20. Microsystème selon la revendication 19, où le dispositif d'arrêt (50, 52, 57) est prévu pour la génération d'au moins un minimum de potentiel local ou d'au moins une ligne de potentiel s'étendant perpendiculairement à la direction d'écoulement du liquide réactif.

21. Microsystème selon la revendication 19 ou la revendication 20, où le dispositif d'arrêt (50, 52, 57) est disposé sur un côté du canal principal (30), limité par la paroi du canal où est formé le débouché du canal latéral (31, 36).

22. Microsystème selon la revendication 19 ou la revendication 20, où le dispositif d'arrêt (50, 52, 57) est disposé au centre du canal principal.

23. Microsystème selon au moins une des revendications 19 à 22, où le dispositif d'arrêt (50, 52, 57) est prévu pour l'application de forces de maintien diélectrophorétiques, optiques et/ou à transmission acoustique.

24. Microsystème selon la revendication 23, où le dispositif d'arrêt (50, 52) est prévu pour former une barrière de champ diélectrique, laquelle se rétrécit dans le sens longitudinal du canal principal jusqu'au minimum de potentiel local.

25. Microsystème selon la revendication 24, où le dispositif d'arrêt (52) comprend au moins une électrode centrale (54), centralement disposée sur le côté amont du dispositif d'arrêt (52).

26. Microsystème selon la revendication 25, où le dispositif d'arrêt (52) comprend au moins deux électrodes latérales (53, 55), faisant saillie dans le canal sur le côté amont de l'électrode centrale (54).

27. Microsystème selon la revendication 26, où le dispositif d'arrêt (52) comprend au moins une contre-électrode (56) disposée sur le côté amont des électrodes latérales (53, 55).

28. Microsystème selon la revendication 23, où le dispositif d'arrêt (57) est prévu pour la formation d'au moins une barrière de champ s'étendant linéairement perpendiculairement au sens longitudinal du canal principal.

29. Microsystème selon au moins une des revendications 19 à 28, où le ou les dispositifs de mesure (80) sont prévus pour la mesure de la particule dans le dispositif d'arrêt (50, 52, 57).

30. Microsystème selon la revendication 29, où au moins un dispositif de mesure de référence (90) est prévu pour la mesure comparative sur au moins une particule de référence dans un dispositif d'arrêt de référence (70).

31. Microsystème selon au moins une des revendications 19 à 30, où le dispositif d'arrêt (50, 52, 57) est prévu pour positionner la ou les particules avec un espacement de l'ordre de 50 µm à 4 mm par rapport au débouché (32, 37) du canal latéral (31, 36).

32. Microsystème selon au moins une des revendications 19 à 31, où au moins un canal de vidange (38) est disposé en aval du dispositif d'arrêt (50, 52, 57).

33. Microsystème selon la revendication 31, où au moins une électrode de tri (66a, 66b) est prévue entre le dispositif d'arrêt (50, 52, 57) et le ou les canaux de vidage (38).

34. Microsystème selon au moins une des revendications 19 à 33, où au moins une électrode de barrière (67) est disposée dans le ou les canaux latéraux (31, 36), par laquelle une pénétration de particules est empêchée dans le ou les canaux latéraux (31, 36).

35. Microsystème selon au moins une des revendications 19 à 34, où une électrode de blindage (65) est disposée entre le débouché (32, 37) du ou des canaux latéraux (31, 36) et le dispositif d'arrêt (50, 52, 57), par laquelle des particules peuvent être retenues ou déviées du dispositif d'arrêt (50, 52, 57).

36. Microsystème selon l'une des revendications 19 à 35, **caractérisé en ce que**
a) l'agencement d'électrodes (52) est réalisé pour le confinement sans contact des particules en suspension dans le canal principal (30) du microsystème fluidique,
b) l'agencement d'électrodes (52) comporte au moins trois paires d'électrodes (53, 54, 55),
c) les électrodes (53, 54, 55) sont respectivement disposées sur des surfaces de fond et des surfaces de couverture du canal principal (30) et comprennent respectivement une électrode centrale (53) et deux électrodes latérales (54, 55),
d) les électrodes centrales (53) sont prévues pour former une barrière de champ diélectrique perpendiculairement à une direction d'écoulement (A) dans le canal principal (30), en cas d'application d'une tension alternative à haute fréquence, et
e) les électrodes latérales (54, 55) sont disposées devant l'électrode centrale (53) relativement à la direction d'écoulement (A).

37. Microsystème selon la revendication 36, où au moins une des électrodes centrales (53) présente un élargissement à son extrémité libre.

38. Microsystème selon la revendication 36 ou la revendication 37, pourvu d'au moins une contre-électrode (56) alimentée par potentiel de masse ou potentiel libre (flottant), disposée centralement devant les électrodes latérales (54, 55) relativement à la direction d'écoulement (A).

39. Microsystème selon l'une des revendications 19 à 35, **caractérisée en ce que**
a) l'agencement d'électrodes est réalisé pour le confinement des particules en suspension dans le canal principal (30) du microsystème fluidique, et
b) l'agencement d'électrodes comporte au moins une paire de bandes d'électrodes droites (58) disposées sur les surfaces de fond et les surfaces de couverture du canal principal (30) et s'étendant perpendiculairement au sens longitudinal du canal.

40. Microsystème selon la revendication 39, où les bandes d'électrodes (58) sont alignées les unes en face des autres sur les surfaces de fond et les surfaces de couverture.

41. Microsystème selon la revendication 39, où les bandes d'électrodes (58) sont décalées les unes par rapport aux autres sur les surfaces de fond et les surfaces de couverture.
